(19) Europäisches Patentamt
European Patent Office
Office européen des brevets

(11) **EP 1 801 995 A1**

(12) **EUROPEAN PATENT APPLICATION**

(43) Date of publication:
**27.06.2007 Bulletin 2007/26**

(51) Int Cl.:
***H04B 7/005*** (2006.01)

(21) Application number: **05257911.7**

(22) Date of filing: **21.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **FUJITSU LIMITED**
**Kawasaki-shi,**
**Kanagawa 211-8588 (JP)**

(72) Inventor: **Hart, Michael John**
**London W12 9LL (GB)**

(74) Representative: **Cooper-Rolfe, Elizabeth Louise**
**Haseltine Lake**
**Lincoln House**
**300 High Holborn**
**London WC1V 7JH (GB)**

(54) **Signalling in multi-hop communication systems**

(57) This application relates to techniques or reducing the signalling overhead associated with multi-hop communication systems which require one or more administrative signals to be transmitted over more than one of the multi-hop communication links. Administrative signal processing means are described for deriving a) an absolute administrative signal ($A_{UE}$, $A_{RN2}$, $A_{RN1}$), which is indicative of an absolute value derived by a communication apparatus of the multi-hop system; and b) at least one relative administrative signal ($A_{UE/RN2}$, $A_{UE/RN1}$, $A_{RN2/RN1}$) which is indicative of a value derived by another communication apparatus of the multi-hop system relative to said absolute value. Particularly applicable to multi-hop communication systems which utilise resource control techniques for balancing the transmission resources allocated to each of the communication links.

Fig.8

Printed by Jouve, 75001 PARIS (FR)

EP 1 801 995 A1

**Description**

The present invention relates to a wireless communication system, parts of a communication system and related methods for multi-hop communications in which a signal is transmitted from a source apparatus to a destination apparatus via at least one intermediate apparatus. In particular, the present invention relates to techniques for improving the efficiency of administrative signalling required for the implementation of multi-hop communication systems.

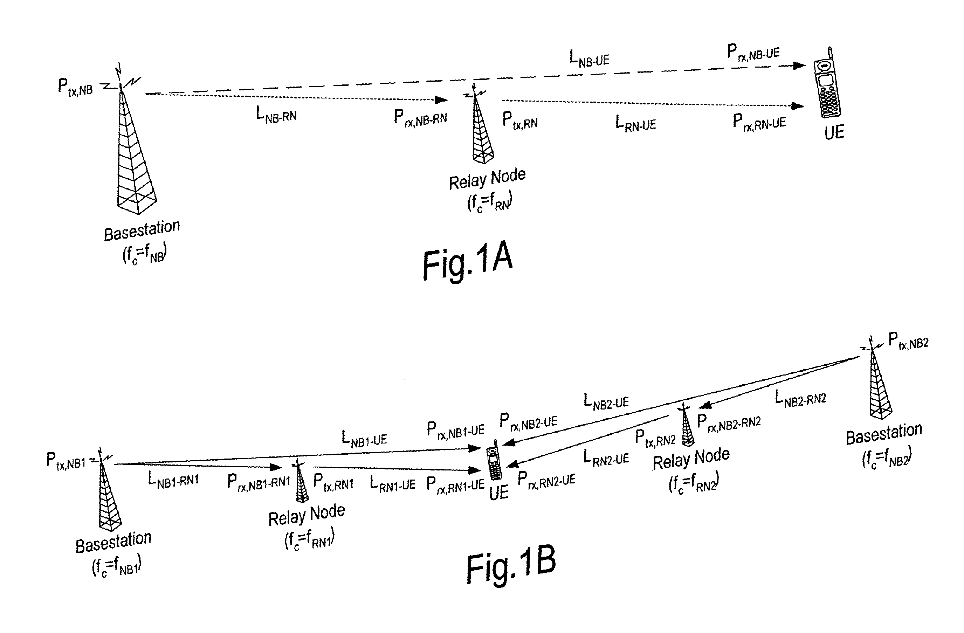

In a multi-hop communication system, communication signals are sent in a communication direction along a communication path (C) from a source apparatus to a destination apparatus via one or more intermediate apparatuses. Figure 1A illustrates a single-cell two-hop wireless communication system comprising a base station (known in the context of 3G communication systems as "node-B" (NB)) a relay node (RN) and a user equipment (UE). The communication direction may be the uplink (UL) or the downlink (DL). In the case where communication signals are being transmitted on the downlink (DL) from a base station to a destination user equipment (UE) via the relay node (RN), the base station comprises the source apparatus (S) and the user equipment comprises the destination apparatus (D). In the case where communication signals are being transmitted on the uplink (UL) from a user equipment (UE), via the relay node, to the base station, the user equipment comprises the source apparatus and the base station comprises the destination apparatus. The relay node is an example of an intermediate apparatus (I) and comprises: a receiver, operable to receive a signal from the source apparatus; and a transmitter, operable to transmit this signal, or a derivative thereof, to the destination apparatus.

It is known that the occurrence of propagation loss, or "pathloss", due to the scattering or absorption of a radio communication as it travels through space, causes the strength of a signal to diminish. Factors which influence the pathloss between a transmitter and a receiver include: transmitter antenna height, receiver antenna height, carrier frequency, clutter type (urban, sub-urban, rural), details of morphology such as height, density, separation, terrain type (hilly, flat). The pathloss L (dB) between a transmitter and a receiver can be modelled by:

$$L = b + 10n \log d \qquad\qquad\qquad (A)$$

Where d (metres) is the transmitter-receiver separation, b(dB) and n are the pathloss parameters and the absolute pathloss is given by

$$l = 10^{(L/10)}.$$

Table I below gives some examples of the calculated pathloss of a signal being transmitted over the different communication links: source to destination (SD), source to intermediate (SI) and intermediate to destination (ID), in a multi-hop transmission system, where b and n are assumed to remain the same over each of the links.

Table I

| | | Separation (metres) | | | Pathloss in dB | | | Absolute Pathloss | | |
|---|---|---|---|---|---|---|---|---|---|---|
| b(dB) | n | SD | SI | ID | SD | SI | ID | SD | SI | ID |
| 15.3 | 3.76 | 1000 | 500 | 500 | 128.1 | 116.8 | 116.8 | 6.46E12 | 4.77E11 | 4.77E11 |
| 15.3 | 3.76 | 1000 | 600 | 600 | 128.1 | 119.76 | 119.76 | 6.46E12 | 9.46E11 | 9.46E11 |
| 15.3 | 3.76 | 1000 | 700 | 700 | 128.1 | 122.28 | 122.28 | 6.46E12 | 1.69E12 | 1.69E12 |

The examples calculated above demonstrate that the sum of the absolute path losses experienced over the indirect link SI + ID may be less than the pathloss experienced over the direct link SD. In other words it is possible for:

$$L(SI) + L(ID) < L(SD) \qquad\qquad\qquad (B)$$

Splitting a single transmission link into two shorter transmission segments therefore exploits the non-linear relationship between pathloss verses distance. From a simple theoretical analysis of the pathloss using equation (A), it can be appreciated that a reduction in the overall pathloss (and therefore an improvement, or gain, in signal strength and thus data throughput) should be achieved if a signal is sent from a source apparatus to a destination apparatus via an intermediate apparatus (e.g. relay node), rather than being sent directly from the source apparatus to the destination apparatus. If implemented, multi-hop communication systems could potentially allow for a reduction in the transmit power of transmitters which facilitate wireless transmissions, which would lead to a reduction in interference levels as well as decreasing exposure to electromagnetic emissions.

However, simulations carried out to test the applicability of multi-hop communication systems have revealed unexpectedly low gains in the throughput of data. Indeed, the gains experienced are well below the potential gain suggested by a simple analysis based on the pathloss equation (A). Consequently, and despite the potential advantages that multi-hop systems may demonstrate in terms of signal range extension, a possible reduction in the overall transmit power required to transmit a signal between a source and destination, and the connectivity of otherwise inaccessible nodes, wireless systems operators have previously been deterred from implementing multi-hop networks.

European Patent Application Nos. EP05253767.7, EP05253768.5, EP05253766.9, EP05253785.9, EP05253784.2 and EP05253783.4, describe inventions previously proposed by the present inventor relating to techniques which seek to improve the throughput of data in multi-hop communication systems. The entire contents of these earlier applications is incorporated herein by way of reference thereto and copies of each of these applications are filed herewith.

The inventions described in the above referenced earlier applications relate to various techniques for determining, and controlling, the allocation of transmission resource across one or more of the communication links in a multi-hop network that will tend to substantially attain, or maintain, a balance between i) a measure of the quality of the communication signal received at the destination apparatus and a ii) measure of the quality of the communication signal received at the, or each, intermediate apparatus. In effect, according to these proposals, the allocation of radio resource is managed and controlled such that the throughput of data across each of the links is substantially equal or near equal. Specifically, a number of different algorithms are described in the above referenced applications for bringing the management and control of radio resource allocation in multi-hop systems into effect. In particular, the previously proposed algorithms seek to identify any "imbalance" that arises in the quality of the communication signal being received by receivers of a multi-hop network, and to determine a measure of, or a change in a measure of, the resource allocated to one or more of the transmitters in the network that will attain, or maintain, the desired balance.

The results of system level simulations conducted to test the benefits of the resource control techniques previously proposed by the present inventor are provided at the end of this document. These results indicate that a multi-hop communication system which is "balanced", can be expected to demonstrate an improvement in the throughput of data. It is believed that one explanation for the improved throughput demonstrated by these resource management techniques is that they permit a reduction in the absolute transmit power required in a multi-hop system. This is considered in more detail below.

As explained above, a reduction in the total pathloss experienced by a signal may be achieved by splitting a single direct transmission link into two shorter transmission links. As such, the total transmit power required to transmit a communication signal from a source apparatus to a destination apparatus via at least one intermediate apparatus, will be less than is required to transmit the communication signal directly between the source apparatus and the destination apparatus. Thus, less transmit power is needed in order to ensure that the destination apparatus (and possibly also the intermediate apparatus) receives a minimum or "target" signal quality. If no adjustment is made to the transmit power of transmitters in a multi-hop system, then significant excess transmit power (i.e. transmit power exceeding that required to achieve a good, or target, signal quality at the destination apparatus and/or the intermediate apparatus) will result. Rather than serving to further increase the gain achieved by a multi-hop communication as compared to a direct communication between a source apparatus and a destination apparatus, this excess transmit power will merely increase interference levels leading to a deterioration in the quality of the communication link. This deterioration will tend to counteract the potential gain of a multi-hop system as demonstrated by the poor simulation results of previously considered multi-hop communication systems.

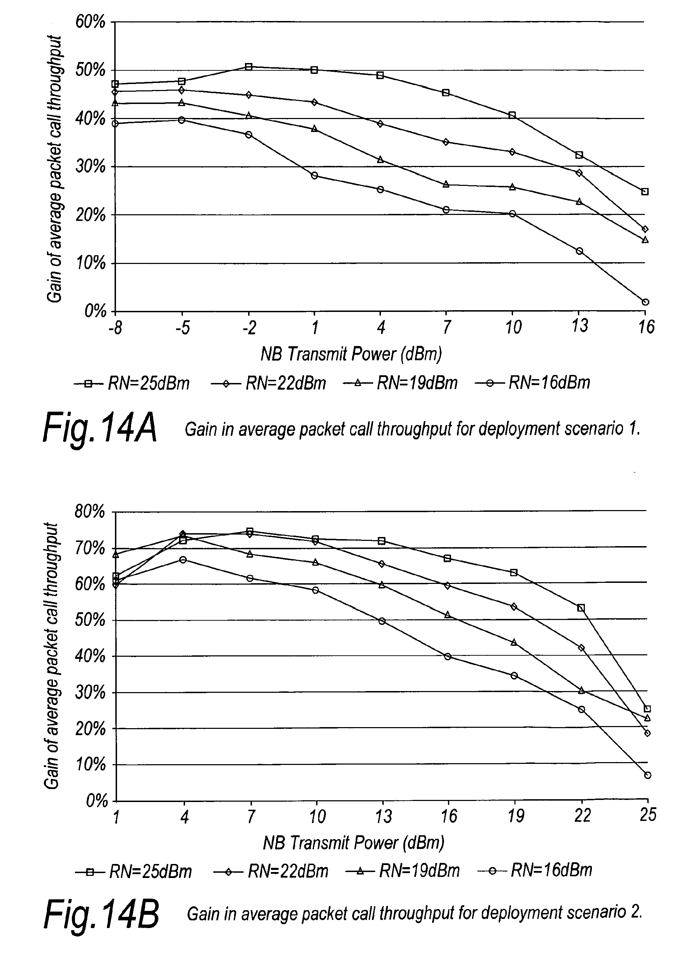

Furthermore, the overall throughput across a two-hop network (for example) is limited by the lower of: the number of data packets received at the intermediate apparatus and the number of data packets received at the destination apparatus. The number of data packets received at a receiver is dependent upon the quality of the communication link that terminates at that receiver. This may be reflected, for example, by a measure of the throughput, a measure of the received signal strength (RSS) or a measure of the signal-to-interference plus noise ratio (SINR). Thus, in effect, the receiver which receives the lowest quality communication signal within a multi-hop system forms a "bottle neck" for data packet transmission, thereby wasting capacity for data transfer on other links within the multi-hop system. An increase in the resource allocated at a transmitter, which does not serve to improve the lowest quality communication signal, will result in additional resource allocation. Consequently, a further degradation is experienced in the performance of the system. This is illustrated in Figures 14A and 14B which plot the variation of the gain in average packet throughput observed by users of a two-hop system compared to that observed for a single hop system, against the transmit power of the source apparatus (NB). Each graph includes four different plots, each representing a different transmit power of the intermediate apparatus. It can be seen that as the transmit power of the base station is increased beyond an optimal point, then a significant degradation in gain will be experienced despite the emission of more signal energy.

It is thought that the improvements demonstrated by multi-hop communication systems which employ a resource management entity, can be attributed to the way in which any imbalance between a measure of the quality of a communication signal received at the destination apparatus and a measure of the quality of a communication signal received at the, or each, intermediate apparatus is substantially reduced or prevented. Thus, excess resource allocation which cannot improve the throughput of data packets and which will only serve to raise interference levels, is minimised.

According to the previously proposed techniques discussed above, it is advantageous for control of the resource allocated to the transmitters of the system to be fulfilled in parts associated with the base station. This is known as "centralised control" and is likely to be favoured by wireless network providers over methods in which control of the resource allocation is fulfilled in parts associated with an intermediate apparatus of the system. A single resource control means associated with the base station is therefore operable to control the transmission resource allocated to each of the transmitters that are operable to transmit a communication signal along a multi-hop communication path towards a destination apparatus. However, the implementation of a multi-hop communication system having a resource control means, particularly where this is centralised in the base station, generally requires a significant amount of information to be signalled, in the form of administrative signals from the other communication apparatuses comprised in the system, in a signalling direction to the resource control means. For example, an apparatus comprised in a multi-hop communication system that is receiving a communication signal will be operable to derive indicators of the quality of the communication signal that is being received. These indicators, which are generated periodically, may be signalled in a signalling direction along the communication path to the resource control means of the base station, via any other intermediate apparatus which is on the communication path between the said apparatus and the base station. According to the previously proposed techniques, the resource control means may be provided with a means to detect any substantial imbalance between indicators signalled by each of the receivers, or a means to detect any deviation in an indicator derived by a receiver from a desired value. In response to the detection of such an imbalance or deviation, the resource control means is operable to determine a measure of, or a change in a measure of, the resource allocated to one or more of the apparatuses that are transmitting the communication signal (or a derivative thereof), that will tend to substantially attain or maintain a balance between the said indicators derived by the receivers. Any new transmission resource allocation, or change in resource allocation, is commanded to the appropriate communication apparatus in the form of administrative signals comprising transmission resource command (TRC) signals.

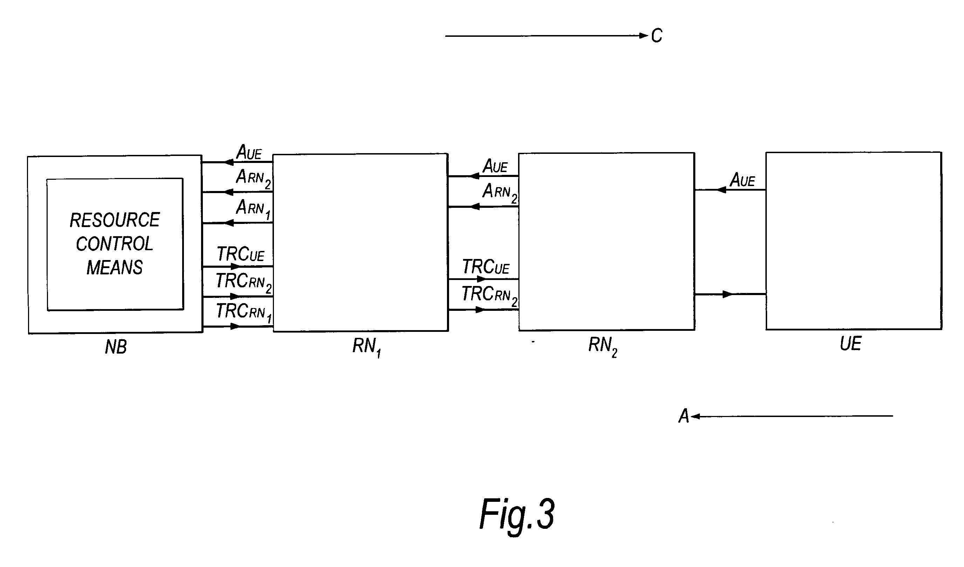

As illustrated in Figure 3, it is necessary for each intermediate apparatus to generate and transmit an indicator of the quality of the communication signal received by the receiver and, in addition, to propagate indicators which have been signalled by other apparatuses towards the control means which, in this example, is associated with the base station. Thus, the bandwidth occupied by administrative signalling increases with proximity to the base station and with the number of communication links forming the multi-hop communication system. The administrative signalling burden of a communication apparatus of the previously considered multi-hop communication systems, will depend on the position of the apparatus within the multi-hop network, the direction of communication (UL or DL), and the location of the resource control means. In the case of downlink (DL) transmissions and a centralised resource control means, the signalling direction of administrative signals required by the control means will be opposite to the direction of communication. In the case of the uplink (UL) transmissions from a source apparatus to the base station, via one or more intermediate apparatus, the signalling direction will be the same as the communication direction.

The signalling overhead associated with these prior techniques can be alleviated to some extent if some functions are devolved to other parts of the communication system. For example, a destination apparatus may comprise an indicator deviation detection means in addition to an indicator derivation means, so that rather than signalling the indicators of the quality of the communication signal received at the destination apparatus, the destination apparatus is able to monitor the indicators to detect any change in the quality which could indicate the presence of an imbalance in the system. If such a deviation is detected, a request for an adjustment in the transmit power allocated to the communication link which terminates at the destination apparatus may be signalled to the resource control means. However, this request must still be propagated through the multi-hop network to the resource control means.

Thus, in the context of the present invention, an administrative signal may, for example, be indicative of a measure of the quality of a communication signal received at a communication apparatus, or it may be indicative of a transmission resource command (TRC) to reflect the transmission resource allocated to a communication apparatus, or it may be indicative of a request for a change in the resource allocated to a particular communication apparatus or for a new resource allocation.

Embodiments of the present invention seek to alleviate the signalling overhead associated with multi-hop communication systems which require one or more administrative signals to be transmitted over more than one of the communication links. As such, embodiments of the present invention seek to improve the efficiency of administrative signalling in multi-hop communication systems, particularly, but not exclusively, where these communication systems utilise resource control techniques for balancing the transmission resources allocated to each of the communication links, as described in the above referenced applications directed to earlier inventions of the present inventor.

According to a first aspect of the present invention there is provided a multi-hop communication system comprising at least three communication apparatuses, one said communication apparatus comprising a source apparatus, another said communication apparatus comprising a destination apparatus and the other said communication apparatus (es) comprising an intermediate apparatus, said source apparatus being operable to transmit a communication signal in a communication direction towards the destination apparatus via the, or each, intermediate apparatus, wherein the, or each, intermediate apparatus is operable to receive a communication signal from a previous communication apparatus in said communication direction and to transmit said communication signal, or a signal derived therefrom, to a subsequent apparatus in said communication direction, the communication system further comprising a resource control means operable to determine a measure of, or a change in a measure of, the transmission resource allocated to one or more of the source apparatus and the, or each, intermediate apparatus, that will tend to substantially attain or maintain a balance between: i) a measure of the quality of the communication signal received at the destination apparatus; and ii) a measure of the quality of the communication signal received at the, or each, intermediate apparatus, wherein at least one communication apparatus comprises an administrative signal processing means operable to receive one or more administrative signals from a previous communication apparatus in a signalling direction, and to derive: a) an absolute administrative signal which is indicative of an absolute value derived by a communication apparatus of the multi-hop system; and b) at least one relative administrative signal which is indicative of a value derived by another communication apparatus of the multi-hop system relative to said absolute value, wherein said communication apparatus is further operable to transmit said absolute administrative signal and said at least one relative administrative signal to a subsequent communication apparatus in said signalling direction.

It should be appreciated that terms "previous communication apparatus in a communication direction" and "subsequent communication apparatus in a communication direction" refer to the order in which a communication signal is propagated by a communication apparatus towards the intended destination apparatus. This will depend on whether the communication signal is being transmitted on the uplink with the base station as a destination, or if it is being transmitted on the downlink with the base station as a source apparatus and a user equipment as a destination. Similarly, the terms "previous communication apparatus in a signalling direction" and "subsequent communication apparatus in a signalling direction" refer to the order in which administrative signals are propagated around the multi-hop system.

It should also be appreciated that the communication signal that is transmitted by the source apparatus may be modified or changed by or in the, or each, intermediate apparatus comprised in the multi-hop system. As such, the communication signal actually received by the destination apparatus may be the communication signal transmitted by the source apparatus or it may be a communication signal derived therefrom.

Embodiments of the present invention benefit from a reduction in the administrative signalling overhead required to implement transmission resource control techniques. In particular, the number of bits associated with the relative administrative signal is likely to be significantly less than the number of bits associated with the absolute administrative signal that forms a reference signal. This is particularly the case when the system is balanced or when very little imbalance exists, since little or no relative offset between the values derived by two communication apparatuses which are receiving a communication signal in a multi-hop system will exist. Indeed, in a balanced system, the administrative signalling burden which is additional to the administrative signalling burden of most single hop communication systems which send a single administrative signal to a base station to report the quality of a communication signal received on the DL at a UE, is zero or close to zero.

Preferably, the absolute administrative signal derived by said administrative signal processing means comprises an absolute value derived by said communication apparatus comprising the absolute administrative signal processing means. Alternatively, the absolute administrative signal derived by said administrative signal processing means comprises an absolute value derived by a previous communication apparatus in a signalling direction. The choice as to which administrative signal is to become the absolute administrative signal over a particular link will preferably be made having regard for the deployment set-up of the multi-hop system with a view to minimising the signal processing requirements of an administrative signal processing means. If, for example, the relative positions between a base station and a RN are fixed, so that the pathloss experienced by communication signals being transmitted between the base station and the RN does not alter significantly, it may make more sense to transmit an absolute value which is indicative of the quality of a communication signal being transmitted over this link, and for an administrative signal processing means to determine relative administrative signals to reflect the quality of communication signals transmitted over other previous communication links in a signalling direction.

In the case of downlink communications, the source apparatus is a part of a base station operable to transmit a communication signal via the, or each, intermediate apparatus, to the destination apparatus. In the case of uplink communications, the destination apparatus is part of a base station operable to receive a communication signal transmitted by said source apparatus via the, or each, intermediate apparatus.

According to some embodiments of the present invention, the resource control means is provided in the base station. Alternatively the resource control means may provided in an intermediate apparatus. In this case, the present invention is applicable if the administrative signalling information must be propagated through more than one intermediate apparatus. For example, a multi-hop network may comprise a base station, an advanced relay node, a simple relay node and a user equipment. A resource control means could then be provided in the advanced relay node (and, optionally also in the base station) and administrative signals being received by the simple relay node would then be propagated to the advanced relay node in the form of an absolute administrative signal and a relative administrative signal.

Embodiments of the present invention which are employed in conjunction with multi-hop communication systems having a resource control means require administrative signals that are indicative of values relating to the quality of a communication signal received at a communication apparatus of the multi-hop system. Thus, according to an embodiment of the present invention, said resource control means is operable to receive:

i) an absolute administrative signal which is indicative of an absolute value derived by a communication apparatus of the multi-hop system; and

ii) al least one relative administrative signal which is indicative of a value derived by another communication apparatus of the multi-hop system relative to said absolute value, and to use said absolute and relative administrative signals to determine the measure of, or the change in the measure of, the transmission resource allocated to one or more of the source apparatus and the, or each, intermediate apparatus.

The quality indicators derived by a receiver, or an apparatus operable to receive a communication signal, may comprise a measure of the strength of a communication signal received at the receiver (eg RSS). Alternatively or additionally, one of the indicators derived by the receiver may comprise a measure of the signal-to-interference plus noise ratio (SINR) of a communication signal received at that apparatus, or it may comprise a measure of the variation of the quality of a communication signal received at a given apparatus from a target received signal quality set for the receiving apparatus. An indicator of the variation from target may be a variation from target RSS, a variation from target SINR or a variation from a target which is based on a combination of RSS and SINR.

In the above aspects or any of the following aspects, the intermediate apparatus preferably comprises a receiver operable to receive the signal transmitted by the source apparatus; and a transmitter operable to transmit the received signal, or a signal derived therefrom, to the destination apparatus. Duplexing of signals to separate communication signals received by the intermediate apparatus from communication signals transmitted by the intermediate apparatus may be Frequency Division Duplex (FDD) or Time Division Duplex (TDD). One or more of the intermediate apparatuses may preferably comprise a so-called relay node (RN) or relay-station (RS). A relay node has the capability of receiving a signal for which it is not the intended final destination and then transmitting the signal on to another node such that it progress towards the intended destination. A relay node may be of the regenerative type, where the received signal is decoded to the bit level, making a hard decision. If the received packet is found to be in error then retransmission is requested, hence the RN incorporates ARQ or H-ARQ. ARQ or H-ARQ is a receiver technique for managing retransmission request and subsequent reception of retransmitted signals. Once the packet is successfully received, it is then scheduled for retransmission towards the destination, based on any radio resource management strategies incorporated into the RN. Alternatively a relay node may be of the non-regenerative type, whereby data is amplified at the relay node and the signal is forwarded to the next station. It is envisaged that the function of an intermediate apparatus or relay node may be provided by a mobile phone, or other user equipment.

According to a second aspect of the present invention, there is provided a method of transmitting a communication signal, in a communication direction, from a communication apparatus acting as a source apparatus, towards another communication apparatus acting as a destination apparatus, via at least one other communication apparatus acting as an intermediate apparatus, wherein the, or each, intermediate apparatus receives a communication signal from a previous communication apparatus in said communication direction and transmits said communication signal, or a signal derived therefrom, to a subsequent apparatus in said communication direction, the method comprising the step of determining a measure of, or a change in a measure of, the transmission resource allocated to one or more of the source apparatus and the, or each, intermediate apparatus, that will tend to substantially attain or maintain a balance between:

i) a measure of the quality of the communication signal received at the destination apparatus; and

ii) a measure of the quality of the communication signal received at the, or each, intermediate apparatus, wherein at least one communication apparatus receives one or more administrative signals from a previous communication apparatus in a signalling direction and derives:

a) an absolute administrative signal which is indicative of an absolute value derived by a communication apparatus of the multi-hop system; and

b) at least one relative administrative signal which is indicative of a value derived by another communication apparatus of the multi-hop system relative to said absolute value, said absolute administrative signal and said at least one relative administrative signal being transmitted to a subsequent communication apparatus in said signalling direction.

According to a third aspect of the present invention, there is provided a communication apparatus for use in a multi-hop communication system, said communication apparatus comprising a transmitter and a receiver and being operable to receive a communication signal from a previous communication apparatus in a communication direction and to transmit said communication signal, or a signal derived therefrom, to a subsequent communication apparatus in said communication direction, said communication apparatus comprising administrative signal processing means operable to receive one or more administrative signals from a previous communication apparatus in a signalling direction, and to derive:

a) an absolute administrative signal which is indicative of an absolute value derived by a communication apparatus of the multi-hop system; and
b) at least one relative administrative signal which is indicative of a value derived by another communication apparatus of the multi-hop system relative to said absolute value, wherein said communication apparatus is further operable to transmit said absolute administrative signal and the, or each, relative administrative signal to a subsequent communication apparatus in said signalling direction.

Preferably, the communication apparatus further comprises indicator derivation means, operable to derive an indicator of the quality of a communication signal received by said communication apparatus.
The communication apparatus of the third aspect may comprise an intermediate apparatus in a multi-hop communication system in which a communication signal is transmitted, in a communication direction, from a communication apparatus acting as a source apparatus, towards another communication apparatus acting as a destination apparatus, via the intermediate apparatus, wherein the communication apparatus further comprises:

a resource control means operable to determine a measure of, or a change in a measure of, the transmission resource allocated to one or more of the source apparatus and the intermediate apparatus, that will tend to substantially attain or maintain a balance between:

i) a measure of the quality of the communication signal received at the destination apparatus; and
ii) a measure of the quality of the communication signal received at the intermediate apparatus.

According to a fourth aspect of the present invention, there is provided a base station for use in a multi-hop communication system and operable to transmit a communication signal in a communication direction towards a communication apparatus acting as a destination apparatus, via at least one other communication apparatus acting as an intermediate apparatus, the base station comprising a resource control means operable to determine a measure of, or a change in a measure of, the transmission resource allocated to one or more of the source apparatus and the, or each, intermediate apparatus, that will tend to substantially attain or maintain a balance between: i) a measure of the quality of the communication signal received at the destination apparatus; and ii) a measure of the quality of the communication signal received at the, or each, intermediate apparatus, wherein the base station is further operable to receive: a) an absolute administrative signal which is indicative of an absolute value derived by a communication apparatus of the multi-hop system; and b) al least one relative administrative signal which is indicative of a value derived by another communication apparatus of the multi-hop system relative to said absolute value, and to use said absolute and relative administrative signals to determine the measure of, or the change in the measure of, the transmission resource allocated to one or more of the source apparatus and the, or each, intermediate apparatus.
According to a fifth aspect of the present invention, there is provided a base station for use in a multi-hop communication system and operable to receive a communication signal transmitted, in a communication direction, by a communication apparatus acting as a source apparatus, via at least one other communication apparatus acting as an intermediate apparatus, the base station comprising a resource control means operable to determine a measure of, or a change in a measure of, the transmission resource allocated to one or more of the source apparatus and the, or each, intermediate apparatus, that will tend to substantially attain or maintain a balance between: i) a measure of the quality of the communication signal received at the destination apparatus; and ii) a measure of the quality of the communication signal received at the, or each, intermediate apparatus, wherein the base station is further operable to receive: a) an absolute administrative signal which is indicative of an absolute value derived by a communication apparatus of the multi-hop system; and b) al least one relative administrative signal which is indicative of a value derived by another communication apparatus of the multi-hop system relative to said absolute value, and to use said absolute and relative administrative signals to determine the measure of, or the change in the measure of, the transmission resource allocated to one or more of the source apparatus and the, or each, intermediate apparatus.

Whilst the present invention has been developed with a view to improving the signalling efficiency of previous multi-hop communication systems which utilise a resource control means, it is envisaged that the present invention is more generally applicable to any multi-hop system which requires administrative signals to be transmitted over more than one link, where these administrative signals may be represented as relative values.

As such, according to a further aspect of the present invention, there is provided a multi-hop communication system comprising at least three communication apparatuses, one said communication apparatus comprising a source apparatus, another said communication apparatus comprising a destination apparatus and the other said communication apparatus(es) comprising an intermediate apparatus, said source apparatus being operable to transmit a communication signal in a communication direction towards the destination apparatus via the, or each, intermediate apparatus, wherein the, or each, intermediate apparatus is operable to receive a communication signal from a previous communication apparatus in said communication direction and to transmit said communication signal, or a signal derived therefrom, to a subsequent apparatus in said communication direction, wherein at least one communication apparatus comprises an administrative signal processing means operable to receive one or more administrative signals from a previous communication apparatus in a signalling direction, and to derive: a) an absolute administrative signal which is indicative of an absolute value derived by a communication apparatus of the multi-hop system; and b) at least one relative administrative signal which is indicative of a value derived by another communication apparatus of the multi-hop system relative to said absolute value, wherein said communication apparatus is further operable to transmit said absolute administrative signal and said at least one relative administrative signal to a subsequent communication apparatus in said signalling direction.

It is envisaged that embodiments of the present invention which may be used, prior to deployment of a multi-hop system, to optimise the system and/or to substantially balance a measure of the quality of a communication signal received at the, or each intermediate apparatus and a measure of the quality of a communication signal received at the destination apparatus. It is also envisaged that embodiments of the present invention may be implemented within an existing multi-hop system in order to seek to achieve and maintain "balance" in a measure of the quality of a communication signal across all links. Thus, the present invention may be employed within a multi-hop communication system to establish a substantial "balance" between an indicator of the RSS or the SINR at the destination apparatus and an indicator of the RSS or the SINR, at the, or each, intermediate apparatus. The transmit powers will advantageously be optimised initially with respect to a target received signal quality for one of the apparatuses operable to receive a communication signal in a multi-hop system. This will usually be the destination apparatus. Thus, an indicator of a measure of the variation of the quality of a communication signal received at the destination from a target received signal quality (= "variation from target" indicator), will advantageously be minimal when a system has been optimised according to embodiments of the present invention. Thereafter, if a change is detected in the variation from target indicator, which may be in a positive or negative sense, e.g. if the quality of the communication signal has deteriorated or improved, or if the target set for the apparatus has changed, the variation from target indicator will increase. In this case, embodiments of the present invention which enable a deviation of the variation from target indicator from a desired value to be detected, will advantageously seek to bring the variation from target indicator to the desired value.

There are a number of different types of resource which may be adjusted including the allocation of the transmit power at the transmitters, transmission bandwidth, number of antennas, coding rate, modulation scheme. In the case where an allocation of the amount of bandwidth is used, where this is effectively defined as a proportion of the total transmission medium, the actual resource allocated depends on the channel access method employed. For example in a time division multiple access (TDMA) system it would be a number of time slots or a length of time for which the transmitter is allowed to transmit in order to communicate with the receiver. The longer the time or the greater the number of slots used, the greater the bandwidth is that is allocated to that particularly communication link. Similarly, in the case of a (orthogonal) frequency division multiple access (OFDMA/FDMA) system the allocation would be the allocation of a frequency bandwidth carrier or a number of carriers. Further the amount of frequency associated with each carrier could be changed. Finally in the case of CDMA it could be the number of codes, or the spreading factor used for any code that is used to communicate between the source and destination. Any method of resource allocation effectively control the rate at which data can be transferred from the source to the destination, in a similar manner to the case of transmit power.

Various aspects of the present invention will now be described which utilise the allocation of transmit power to attain a substantial balance between the quality indicators derived by apparatuses operable to receive a communication signal in a multi-hop communication system.

In any of the above aspects, the various features may be implemented in hardware, or as software modules running on one or more processors or as a combination of the two. For example, a communication apparatus as mentioned above may have a processor such as a digital signal processor (DSP), or a computer which operates according to a program. The invention also provides computer programs and computer program products for carrying out any of the methods described herein, and computer readable media having stored thereon programs for carrying out any of the methods described herein. A computer program embodying the invention may be stored on a computer-readable medium, or it could, for example, be in the form of a signal such as a downloadable data signal provided from an Internet web site, or it could be in any other form.

For a better understanding of the present invention and to show how the same may be carried into effect, reference will now be made, by way of example, to the accompanying drawings in which:

Figure 1A illustrates a single cell/relay model of a wireless communication system;

Figure 1B illustrates a two cell/relay model of a wireless communication system;

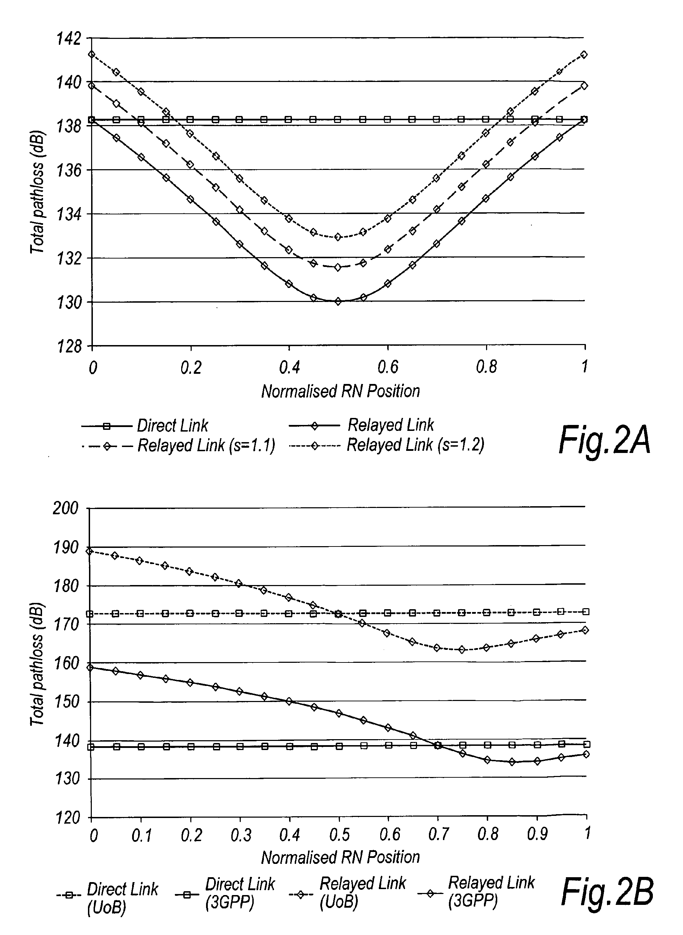

Figures 2A and 2B each show a graphical representation of the theoretical gain that may be achieved by a multi-hop communication system based on pathloss equation (A);

Figure 3 illustrates the signalling bandwidth in a previously considered multi-hop communication system having a centralised transmission resource control means;

Figure 4 illustrates a two-hop communication system according to a first embodiment of the present invention;

Figure 5 illustrates parts of a communication apparatus embodying the present invention;

Figure 6 illustrates a first part of an algorithm embodying the present invention;

Figure 7 illustrates a second part of an algorithm embodying the present invention;

Figure 8 shows a signalling scheme embodying the present invention for DL communications ;

Figure 9 shows a further signalling scheme embodying the present invention;

Figure 10 shows a signalling scheme embodying the present invention;

Figures 11A and 11B illustrate the relationship between source transmit power and intermediate transmit power in the case of a multi-hop communication system having a non-regenerative relay node and using an FDD duplexing technique;

Figures 12A and 12B illustrates the relationship between source transmit power and intermediate transmit power in the case of a multi-hop communication system having a non-regenerative relay node and using a TDD duplexing technique;

Figures 13A and 13B illustrate the optimal NB transmit power as a function of RN transmit power;

Figure 14 shows a graphical illustration of the variation in the average gain in throughput observed by users of a multi-hop system as compared to that observed for a single hop system; and

Figure 15 illustrates the optimal NB transmit power as a function of RN transmit power where it is assumed that the communication link between the source and destination apparatus has a 3dB gain compared with the shorter multi-hop links.

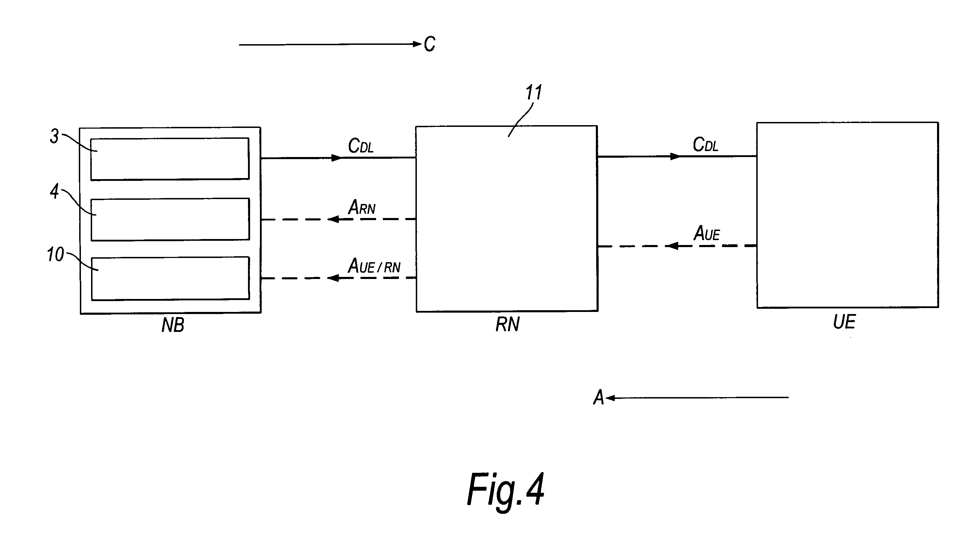

Referring to Figure 4 which illustrates a two-hop communication system according to a first embodiment of the present invention in which downlink (DL) communication signals $C_{DL}$ are transmitted on a first link from a node-B (NB) to a relay node (RN), and on a second link from the relay node to a user equipment (UE). In this example, the node-B constitutes the source apparatus, the relay node constitutes an intermediate apparatus and may be a relay node of the regenerative or non-regenerative type, and the user equipment constitutes the destination apparatus.

It is helpful to recognise that there are a number of different events which, if they arise, can potentially lead to an "imbalance" (i.e. a difference between a measure of the quality of a communication signal received at the destination apparatus and a measure of the quality of a communication signal received at the intermediate apparatus) in a multi-hop system:

i) The path loss arising over one of the links changes. This may be due to the position of one or both of the transmitter and receiver for that link changing, or due to a change in the environmental conditions or interference levels arising between the transmitter and the receiver.

ii) It is usual for an apparatus which is operable to receive a communication signal, to have a target RSS or target SINR. This is usually set by the network provider and may vary depending on the characteristics of the communication system or receiving apparatus, or depending on the type of data to be transmitted. The target RSS/SINR of a mobile phone or other user equipment may vary and any change in target can be accommodated for by adjusting the transmission resource allocated to the transmitting apparatus in such a way as to tend to minimise a measure of the variation of the quality of a communication signal received at the destination apparatus from a target received signal quality (i.e. "variation from target"). In the case of a multi-hop system, merely adjusting the transmission resource allocated to one apparatus in order to accommodate a change in target of one of the receiving apparatuses, will lead to an imbalance within the system.

According to the present embodiment a resource control means (10) is provided in the node-B which is operable to determine a measure of, or a change in a measure of, the transmission resource allocated to one or both of the NB and the RN that will tend to attain or maintain a balance between the quality of the communication signal being received at the RN and the quality of the communication signal being received at the UE. In this example, the transmission resource utilised comprises the transmit power. The user equipment and the relay node continually monitor the received signal strength and derive values (e.g. RSS/SINR/variation from target RSS/SINR) which are indicative of the quality of the received signal strength. These indicators are signalled to the resource control means as administrative signals and are required by the resource control in order that the transmission resource allocated across both of the transmission links can be managed so that any imbalance, or potential imbalance, in the quality of the received signal strength at the RN and the UE can be minimised or prevented.

Two distinct algorithms are implemented according to the present embodiment in order that the resource control means can respond to an imbalance, or a potential imbalance, which arises as a result of the occurrence of either of the above mentioned possible events. The NB is provided with an indicator deviation detection means (3), required by the first algorithm of this embodiment, and an imbalance detection means (4), required by the second algorithm of this embodiment. The imbalance detection means (4) may, for example, comprise a pathloss updating means which is operable, following receipt of administrative signals relating to indicators derived by both said destination apparatus and said intermediate apparatus, or following a change in one or both of said indicators, to determine a measure of the path loss experienced by a communication signal being transmitted between the NB and the RN and between the RN and the UE.

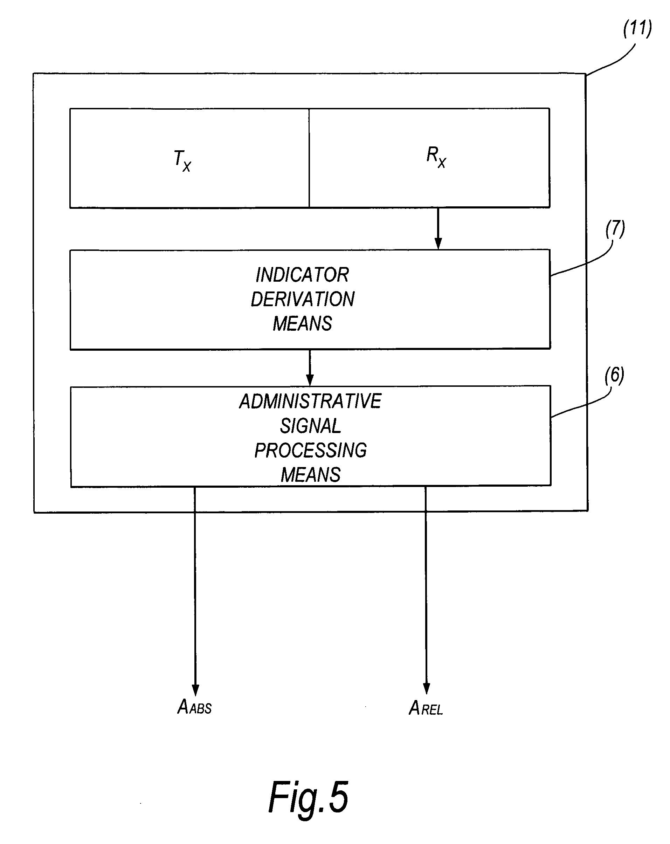

Figure 5 illustrates parts of a communication apparatus (11) embodying the present invention which may be used, for example, as an intermediate apparatus in the embodiment shown in Figure 4. The apparatus comprises a transmitter (Tx), for transmitting communication signals and administrative signals, a receiver (Rx) for receiving communication signals and administrative signals, an indicator derivation means (7), and an administrative signal processing means (6). In use, the administrative signal processing means is operable to generate an absolute administrative signal, which is indicative of the indicator derived by the indicator derivation means and one or more relative administrative signals which are indicative of a value derived by another communication apparatus relative to the indicator derived by the indicator derivation means.

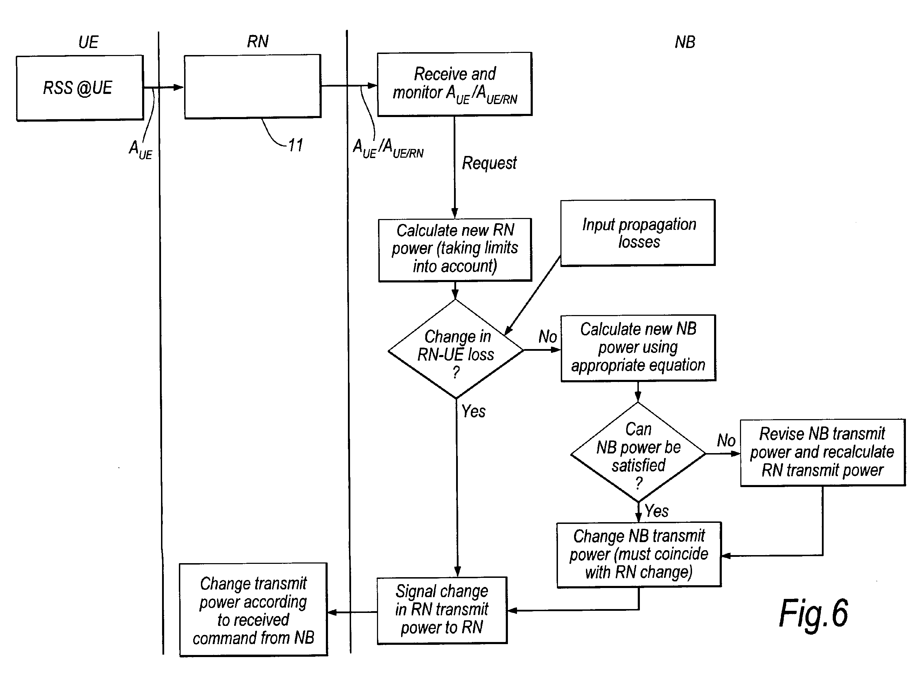

The first algorithm, illustrated by Figure 6, provides the communication system of this embodiment with a means for:

i) responding to an imbalance which arises due to a change in pathloss between the intermediate apparatus and the destination apparatus by calculating a new transmit power for the intermediate apparatus; and/or

ii) responding to a potential imbalance which could result following a change in the target of the destination apparatus by calculating a new transmit power for the intermediate apparatus and the source apparatus.

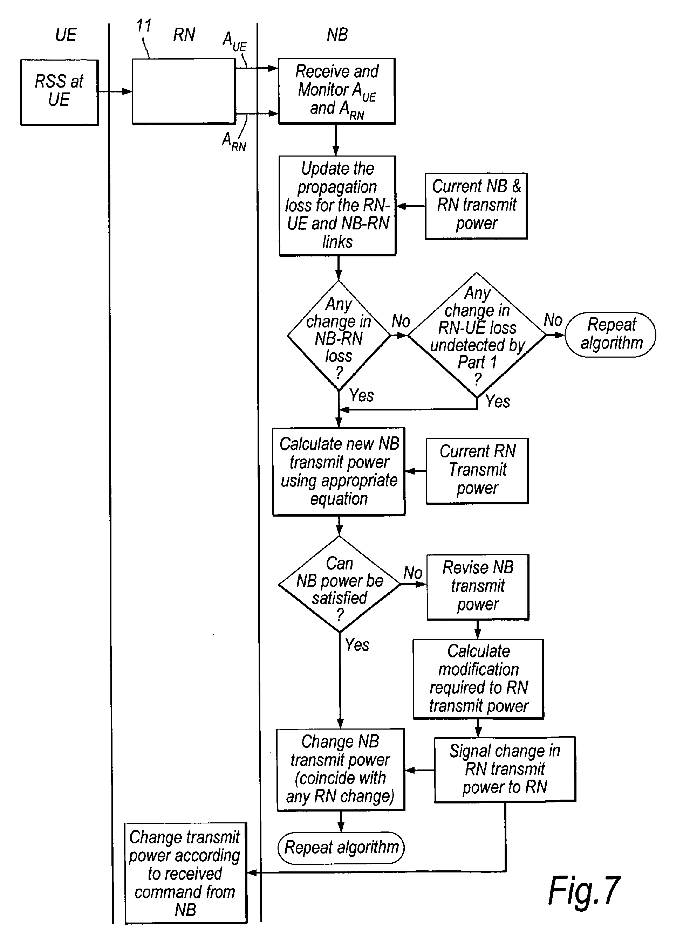

The second algorithm, illustrated by Figure 7, provides the communication system of this embodiment with a means for:

adjusting the transmit power of the source apparatus in order to tend to achieve or maintain balance between the quality of a communication signal received at the destination apparatus and the quality of a communication signal received at the intermediate apparatus. In particular, the second algorithm advantageously provides a means for responding to an imbalance which arises due to a change in pathloss between the source and the intermediate apparatus.

In order to enable calculation of a new RN transmit power, the control means in the NB requires knowledge of the current RN transmit power. Two techniques for obtaining this information are available : 1) The NB has knowledge of the initial transmit power of the RN as well as the maximum; this knowledge is either inherent or signalled when the RN connects to the NB. The NB then tracks the RN transmit power as commands to change it are issued or 2) The RN reports the current transmit power to the NB preventing the need for tracking in the NB. This algorithm assumes the first technique is used since it benefits from lower signalling complexity.

The first algorithm involves the following sequence

1. The destination apparatus transmits an absolute administrative signal $A_{UE}$ towards the resource control means of the Node-B, via the relay node. The absolute administrative signal is indicative of a value of the quality of the communication signal being received by the receiver of the UE;

2. The RN transmits an administrative signal to the resource control means which is indicative of the quality of the communication signal being received by the receiver of the UE. The administrative signal that is transmitted by the RN and which relates to the quality of the signal being received at the UE, may be the absolute administrative signal $A_{UE}$ that is derived by the UE, or it may be a relative administrate signal $A_{UE/RN}$ which is indicative of the value derived by the UE relative to an administrative signal $A_{RN}$ which is indicative of a value of the quality of the communication signal being received by the receiver of the RN.

3. If the indicator deviation detection means (3) provided in the NB detects a deviation in the indicator of the quality of the communication signal being received by the receiver of the UE, which may reflect a change in the pathloss between the RN and the UE or a change in the target received signal quality set for the UE, then a request for a change in the transmission resource allocated for the RN is signalled locally to the resource control means (10).

4. Based on a knowledge of the current RN transmit power, the resource control means calculates the new RN resource allocation required to satisfy the change requested for resource allocation for the RN. Where the type of resource being used to control the multi-hop system is transmit power, the NB takes into account the finite limit of the RN transmit power, adjusting the new transmit power as appropriate;

4. Then:

i) if it is detected that no change has occurred in the RN-UE propagation loss (as determined by an input signal derived by the second algorithm of this embodiment) then the request has been generated because of a change in the target at the UE, not a change in the RN-UE propagation loss. In this case the resource control means also calculates a new resource allocation for the NB. The NB then checks that the NB resource allocation can be satisfied (e.g. in the case of an increase in transmit power the maximum transmit power is not exceeded). If the maximum is exceeded then the power change is adjusted so this will not occur. The RN transmit power is then recalculated so that balance will be attained. The NB then signals a command to the RN for the RN to adjust its transmit power in accordance with the new transmit power calculated by the resource control means and changes its own transmit power so as to coincide with the RN transmit power change; or
ii) If it is detected that a change has occurred in the RN-UE propagation loss, the NB signals a command to the RN for the RN to adjust its transmit power in accordance with the new transmit power calculated by the resource control means.

The algorithm described above will manage the case of the propagation loss varying between the RN and UE and the case of the UE modifying its target RSS or SINR. In order to handle the case of the propagation loss varying between the NB and RN and the case that both the target in the UE and the propagation loss between the RN and UE varies, such that no request for change in RN transmit power is generated, the following algorithm operates periodically in addition to the first algorithm discussed above. It will be appreciated that the present invention is also application to multi-hop communication systems which implement only one of the two algorithms.

The second algorithm requires that administrative signals which are indicative of the received signal strength at the UE and RN are reported to the resource control means in order to facilitate calculation of the propagation loss across the two links by the imbalance detection means (4) of the resource control means (10).

1. The imbalance detection means (4) receives administrative signals from the RN and uses them to monitor the indicators of the received signal strength at both the UE and RN. Using this in conjunction with the knowledge of the RN and NB transmit power it updates the propagation loss for the NB-RN and RN-UE links;

2. If a change in either the NB-RN or RN-UE propagation loss is detected then the updated propagation loss is used by the resource control means, in conjunction with the knowledge of the RN transmit power, to calculate the optimal NB transmit power. If no change in propagation loss is detected then the current iteration of the algorithm terminates;

3. If a change in propagation loss is detected, then:

i) if the calculated NB transmit power can be met (i.e. the maximum transmit power of the NB will not be exceeded) then NB signals a command to the RN for the RN to adjust its transmit power in accordance with the new transmit power calculated by the second calculation means; or

ii) if the calculated NB transmit power can not be met then the NB transmit power is modified to one that can. The resource control means then calculates the new RN transmit power that ensures optimal balance. The NB then signals a command to the RN for the RN to adjust its transmit power in accordance with the new transmit power calculated by the second calculation means and changes its own transmit power so as to coincide with the RN transmit power change.

The details of the signalling scheme used to implement the present invention in the first embodiment will now be discussed with reference to Figure 4.

The UE derives an indicator of the quality of the communication signal received at the UE which, in this particular embodiment, is the received signal strength (RSS). The indicator is transmitted in the form of an absolute administrative signal $A_{UE}$ to the RN. Since the present embodiment relates to the transmission of downlink communication signals, the direction of transmission of administrative signals, or the "signalling direction", is opposite to the direction of transmission of communication signals or the "communication direction". The RN also derives an indicator of the quality of the communication signal being received at the RN. The RN is then responsible for transmitting two administrative signals to the resource control means of the NB, one relating to the quality of the communication signal being received at the UE and one relating to the quality of the communication signal being received at the RN. According to embodiments of the present invention, the signalling overhead necessary for implementing the control of transmission resource allocation, is advantageously reduced if the RN transmits one absolute administrative signal and one relative administrative signal. As shown in Figure 4, the RN transmits the following administrative signals to the NB:

i) an absolute administrative signal $A_{RN}$ that is indicative of a value of the quality of the communication signal received at the RN;

ii) a relative administrative signal $A_{UE/RN}$ that is indicative of a value of the quality of a communication signal received at the UE relative to the value of the quality of the communication signal received at the RN. The relative administrative signal is derived by the RN from the absolute administrative signal $A_{UE}$ received from the UE.

Alternatively, the RN may transit the following administrative signals:

i) an absolute administrative signal $A_{UE}$ that is indicative of a value of the quality of the communication signal received at the UE. Thus, the signal $A_{UE}$ received by the RN is effectively propagated to the resource control means (10) of the NB; and

ii) a relative administrative signal $A_{RN/UE}$ that is indicative of a value of the quality of the communication signal received at the RN relative to the value of the quality of the communication signal.

In both cases, the number of bits associated with the relative administrative signal is likely to be significantly less than the number of bits associated with the absolute administrative signal that forms a reference signal. This is particularly the case when the system is balanced or when very little imbalance exists, since little or no relative offset between the values derived by the UE and the RN will exist. Thus, according to embodiments of the present invention, the administrative signalling burden associated with multi-hop communications systems which employ resource control techniques such as those described in the previously filed related applications, can be significantly reduced. Indeed, in a balanced system, the administrative signalling burden which is additional to the administrative signalling burden of most single hop communication systems which send a single administrative signal to a base station to report the quality of a communication signal received on the DL at a UE, is zero or close to zero.

Thus, it should be appreciated that signalling schemes embodying the present invention are generally applicable to the signalling of any administrative signal which is indicative of a value that would otherwise require transmission over more than one communication link. However, the advantages associated with embodiments of the present invention are particularly apparent when the present signalling concept is used in conjunction with a resource control technique which seeks to balance the throughout of data in a multi-hop network. Reference is made specifically to the algorithms discussed in aforementioned European Patent Application Nos. EP05253767.7, EP05253768.5, EP05253766.9, EP05253785.9, EP05253784.2 and EP05253783.4 which describe a number of different implementation for controlling transmission resource in multi-hop systems.

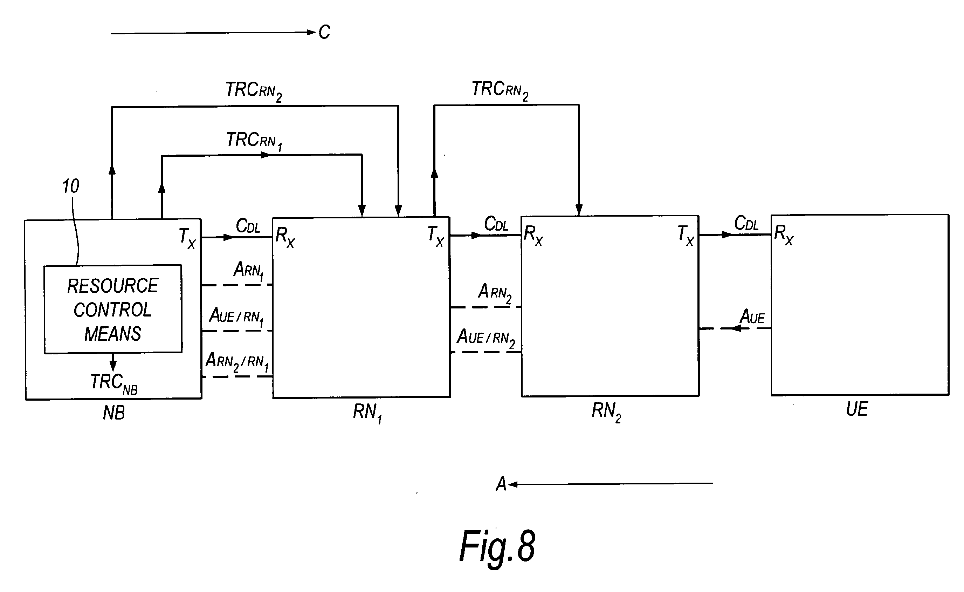

Figure 8 shows a signalling scheme embodying the present invention implemented in a multi-hop communication system comprising a node-B, two intermediate apparatuses, and a user equipment. In this example, downlink (DL) communication signals $C_{DL}$ are transmitted on a first link from a node-B (NB) to a first relay node (RN$_1$), on a second link from RN$_1$ to a second relay node (RN$_2$), and on a third link from RN$_2$ to the user equipment (UE). In this example, the node-B constitutes the source apparatus, the relay nodes constitute intermediate apparatuses and the user equipment constitutes the destination apparatus. The direction of transmission of communication signals is denoted generally by arrow C.

The node-B is provided with a resource control means which is operable to determine a measure of, or a change in a measure of, the transmission resource allocated to one or more of the NB, RN$_1$ and RN$_2$ that will tend to attain or maintain a balance between the quality of the communication signal being received at RN$_1$, RN$_2$ and at UE. The user equipment and both relay nodes transmit administrative signals to the resource control means of the NB for use in the allocation of transmission resource across all three of the transmission links. The direction of transmission of administrative signals is denoted generally by arrow A.

The signalling burden of the communication apparatuses comprised in the multi-hop communication system illustrated in Figure 8 is summarised as follows:

The UE transmits:

i) an absolute administrative signal $A_{UE}$ to RN$_2$ which is indicative of the quality of the signal received at the UE from RN$_2$;

RN$_2$ transmits:

i) an absolute administrative signal $A_{RN2}$ to RN$_1$ which is indicative of the quality of the signal received at RN$_2$ from RN$_1$;
ii) a relative administrative signal $A_{UE/RN2}$ to RN$_1$ which is indicative of the quality of the signal received at the UE from RN$_2$ relative to the quality of the signal received at RN$_2$ from RN$_1$;

RN$_1$ transmits:

i) an absolute administrative signal $A_{RN1}$ to NB which is indicative of the quality of the communication signal received at RN$_1$ from NB;
ii) a relative administrative signal $A_{UE/RN1}$ to NB which is indicative of the quality of the signal received at the UE from RN$_2$ relative to the quality of the signal received at RN$_1$;
iii) a relative administrative signal $A_{RN2/RN1}$ to NB which is indicative of the quality of the signal received at RN$_2$ from RN$_1$ relative to the quality of the signal received at RN$_1$.

The resource control means is operable to receive any of the above administrative signals from RN1 and, based on the information contained in these signals, to determine a measure of, or a change in the measure of, the resource allocated to one or more of the NB, RN$_1$ and RN$_2$. Any new resource allocation required for the NB is signalled locally as a transmit resource command $TRC_{NB}$. Any new resource allocation required for RN$_1$ or RN$_2$ is signalled as a transmit resource command $TRC_{RN1}$ or $TRC_{RN2}$ respectively. Although not illustrated specifically, it will be appreciated that the transmit resource commands may be signalled by the resource control means in the form of an absolute TRC signals and a relative TRC signal.

In this example, the absolute administrative signal transmitted over any one link in the multi-hop system is indicative of the value of the communication signal that terminates at that apparatus. It will be appreciated that the relative administrative signal transmitted by RN$_1$ that is representative of the administrative signal transmitted by the UE, may be referenced ether to RN1 (i.e. $A_{UE/RN1}$ as shown in Figure 8) or it may be referenced to RN$_2$ (i.e. $A_{UE/RN2}$).

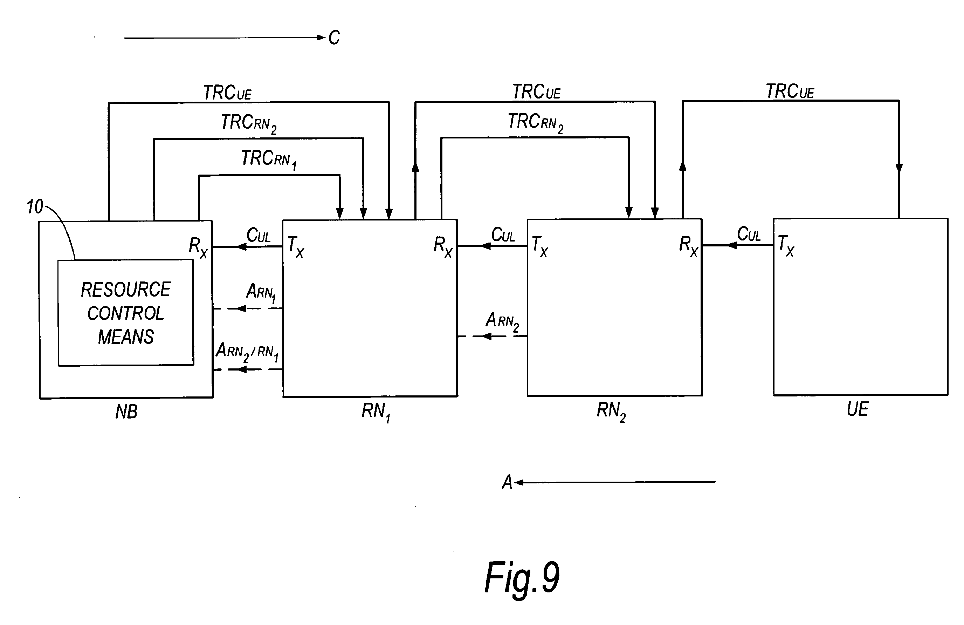

Figure 9 shows a further signalling scheme embodying the present invention implemented in a multi-hop communication system comprising a node-B, two intermediate apparatuses, and a user equipment. In this example, uplink (UL) communication signals $C_{UL}$ are transmitted on a first link from the UE to RN$_2$, on a second link from RN$_2$ to RN$_1$, and on a third link from RN$_1$ to the node-B (NB). In this example, the node-B constitutes the destination apparatus, the relay nodes constitute intermediate apparatuses and the user equipment constitutes the source. The direction of transmission of communication signals is denoted generally by arrow C.

The node-B is provided with a resource control means which is operable to determine a measure of, or a change in a measure of, the transmission resource allocated to one or more of the UE, RN$_2$ and RN$_1$ that will tend to attain or maintain a balance between the quality of the communication signal being received at NB, $RN_1$ and $RN_2$. Both relay nodes transmit administrative signals to the resource control means of the NB for use in the allocation of transmission resource across all three of the transmission links. The direction of transmission of administrative signals is denoted generally by arrow A.

The signalling burden of the communication apparatuses comprised in the multi-hop communication system illustrated in Figure 9 is summarised as follows:

> $RN_2$ transmits:
>
>> i) an absolute administrative signal $A_{RN2}$ to $RN_1$ which is indicative of the quality of the signal received at $RN_2$ from UE;
>
> $RN_1$ transmits:
>
>> i) an absolute administrative signal $A_{RN1}$ to NB which is indicative of the quality of the communication signal received at $RN_1$ from RN2;
>> ii) a relative administrative signal $A_{RN2/RN1}$ to NB which is indicative of the quality of the signal received at $RN_2$ from UE relative to the quality of the signal received at $RN_1$ from $RN_2$;

It will be appreciated that since the indicator of the quality of the communication signal received at the NB from $RN_1$ will be generated by parts associated with the NB, wherein the NB is also provided with the resource control means (10), the administrative signalling burden for UL communication transmissions is less than the administrative signalling burden for DL communication transmissions.

The resource control means is operable to receive any of the above administrative signals from RN1 and, based on the information contained in these signals, to determine a measure of, or a change in the measure of, the resource allocated to one or more of the UE, $RN_2$ and $RN_1$. Any new resource allocation required for UE, $RN_2$ and $RN_1$ is signalled as a transmit resource command $TRC_{UE}$ $TRC_{RN2}$ or $TRC_{RN1}$ respectively.

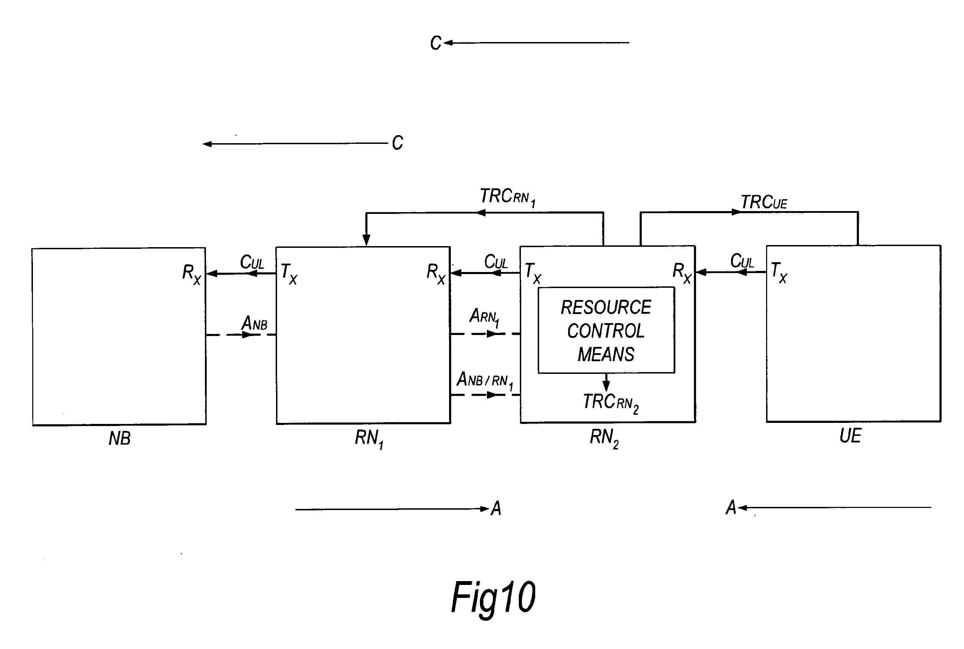

Figure 10 shows a further signalling scheme embodying the present invention implemented in a multi-hop communication system comprising a node-B, two intermediate apparatuses, and a user equipment. In this example, uplink (UL) communication signals $C_{UL}$ are transmitted on a first link from the UE to $RN_2$, on a second link from $RN_2$ to $RN_1$, and on a third link from $RN_1$ to the node-B (NB). In this example, the node-B constitutes the destination apparatus, the relay nodes constitute intermediate apparatuses and the user equipment constitutes the source. The direction of transmission of communication signals is denoted generally by arrow C.

The resource control means is decentralised in RN2 and is operable to determine a measure of, or a change in a measure of, the transmission resource allocated to one or more of the UE, $RN_2$ and $RN_1$ that will tend to attain or maintain a balance between the quality of the communication signal being received at NB, $RN_1$ and $RN_2$. $RN_1$ and NB transmit administrative signals to the resource control means of the NB for use in the allocation of transmission resource across all three of the transmission links. The direction of transmission of administrative signals is denoted generally by arrow A.

The signalling burden of the communication apparatuses comprised in the multi-hop communication system illustrated in Figure 10 is summarised as follows:

> NB transmits:
>
>> i) an absolute administrative signal $A_{NB}$ to $RN_1$ which is indicative of the quality of the communication signal received at NB from $RN_1$.
>> $RN_1$ transmits:
>> i) an absolute administrative signal $A_{RN1}$ to $RN_2$ which is indicative of the quality of the communication signal received at $RN_1$ from $RN_2$;
>> ii) a relative administrative signal $A_{NB/RN1}$ to $RN_2$ which is indicative of the quality of the signal received at NB from $RN_1$ relative to the quality of the signal received at $RN_1$ from $RN_2$.

The resource control means is operable to receive any of the above administrative signals from RN1 and, based on the information contained in these signals, to determine a measure of, or a change in the measure of, the resource allocated to one or more of the UE, $RN_2$ and $RN_1$. Any new resource allocation required for the $RN_2$ is signalled locally as a transmit resource command $TRC_{RN2}$. Any new resource allocation required for $RN_1$ or UE is signalled as a transmit resource command $TRC_{RN1}$ or $TRC_{UE}$ respectively.

In order to illustrate the signalling advantages of embodiments of the present invention where one absolute administrative signal and one relative administrative signal are transmitted over a particular communication link, consider the example where an administrative signal can take a value of between -16 and +15. 5 bits are required to represent this as $2^5 = 32$. If the following two values, for example, are to be signalled to a resource control means: UE = 5, RN = 6, then absolute indicators would require 10 bits of signalling. If, according to the present invention, we send one absolute value of 6, requiring 5 bits, and one relative value of -1 using a 2 bit relative value, then the same information can be conveyed with only 7 bits and no loss in accuracy. Thus, providing a large variation in the value of the signal from the UE and RN does not exist (which will normally be the case if the system is balanced), it is possible to convey required administrative information within a multi-hop system, with less signalling overhead.

The relative value for UE number n may therefore be calculated using:

$$A_{UEn/RN} = A_{UEn} - A_{RN}$$

where n is the UE number.

Those skilled in the art will appreciate that a microprocessor or digital signal processor may be used in practice to implement some or all of the functions of the administrative signal processing means of embodiments of the present invention. Such a processor operates according to an operating program to carry out the various functions.

Theoretical Analysis

The following theoretical analysis derives possible solutions for use by a resource control means for explicitly calculating the optimal transmit power of the transmitting elements comprised in a multi-hop network for various deployment scenarios. As such, the following solutions are particularly useful for calculating the transmission resource allocated by the algorithms described in European Patent Application Nos. 05253767.7 and 05253785.9 and in 05253783.4. The techniques described in European Patent Application Nos. 05253768.5, 05253766.9 and 05253784.2, seek to balance the quality indicators derived by the destination apparatus and intermediate apparatus without performing an explicit calculation of the transmit power required to achieve that balance, however the following theoretical analysis, is nonetheless useful for understanding these techniques. Furthermore, whilst the equations are developed solely for the case of the connections that form the downlink in a multi-hop network, it is straightforward to adapt the equations derived for the case of the uplink. Such an adaptation is achieved by adopting the same methodology used to develop the expressions for the received SINR at the receiving nodes, where the transmitting nodes are now the UE and the RN and the receiving nodes are now the NB and RN. Once expressions for the SINR received at the RN and NB are arrived at, the same methodology can be employed for each deployment scenario in order to determine the optimal transmit power setting of the UE and RN. For each deployment scenario, theoretical solutions are obtained assuming a single-cell model and a two-cell model. In the case of a two cell model, it is assumed that the deployment in both cells is identical and that the transmit powers on the base station (BS) and the intermediate apparatus (I) are the same. It is also assumed that where appropriate $P_{\alpha\_tot,RN} = G_p P_{tx,RN}$ and $P_{\alpha\_tot,NB} = G_p P_{tx,NB}$ and that for the case of TDD both RN's transmit at the same time. This in effect generates the worse case scenario for two cells.

Theoretical solutions may be evolved from a consideration of the signal-to-interference, plus noise ratio (SINR) experienced by the receiving nodes in a multi-hop system (i.e. the or each intermediate apparatus (I) and the destination apparatus (D)). The SINR at a particular node is a measure of the quality of a communication signal received by that node and is a ratio of the received strength of the desired signal to the received signal strength of the undesired signals (noise and interference).

The considerations required for noise and interference depend on the duplexing method used to separate signal received at an intermediate apparatus from those transmitted from an intermediate apparatus, the characteristics of the intermediate apparatus and also the level of inter-cell interference which is taken into account (i.e. interference from neighbouring cells).

The following equation represents the SINR of a communication signal sent from an intermediate apparatus to a destination apparatus for all scenarios, where different terms may be ignored depending upon the type of intermediate apparatus (e.g. non-regenerative or regenerative) and the duplexing method:

$$SINR_{RN-UE} = \frac{G_p P_{tx,RN}}{L_{RN-UE}\left(N + \dfrac{P_{tx,RN}}{L_{RN-UE} SINR_{NB-RN}} + \dfrac{P_{tx\_tot,NB}}{L_{NB-UE}}\right)}$$

For the case of FDD instead of TDD then the third term in the bracket is removed and for the case of regenerative instead of non-regenerative the second term in the bracket is removed.

In the case of a two-cell model as illustrated in Figure 1B, this becomes:

$$SINR_{RN-UE} = \frac{G_p P_{tx,RN1}}{L_{RN1-UE}\left(N + \dfrac{P_{tx,RN1}}{L_{RN1-UE} SINR_{NB1-RN1}} + \dfrac{P_{tx\_tot,NB1}}{L_{NB1-UE}} + \dfrac{P_{tx\_tot,NB2}}{L_{NB2-UE}} + \dfrac{P_{tx\_tot,RN2}}{L_{RN2-UE}}\right)}$$

The first three terms in the bracket in (2) are the same as those in (1). The additional last two terms originate from the interference experienced from the neighboring co-channel NB and RN respectively. Obviously if the neighbouring cell employs a different frequency or uses a different timeslot for relay transmission then the terms needed to model this interference will vary. It should be appreciated that these equations can be extended to a three-cell model or more for a higher level of accuracy.

Considering now the various possible deployment scenarios in turn, for the case of DL transmissions transmitted between a base-station or node-B (NB), via an intermediate relay node (RN) to a destination user equipment (UE).

1A. Regenerative relay with FDD - Single-cell model as illustrated in Figure 1A

In this case, the SINR at a destination UE which is connected to an intermediate RN is given by:

$$SINR_{RN-UE} = \frac{G_p P_{tx,RN}}{L_{RN-UE} N} \qquad (1)$$

Where $G_P$ is the processing gain, $P_{tx,RN}$ is the transmit power on the channel of interest at the RN, $L_{RN-UE}$ is the propagation loss on the NB to RN link and $N$ is the noise. Note this assumes that no intra-cell interference exists.

The SINR at an intermediate RN which is operable to receive signals from the NB is given by:

$$SINR_{NB-RN} = \frac{G_p P_{tx,NB}}{L_{NB-RN} N} \qquad (2)$$

Where $P_{tx,NB}$ is the transmit power on the channel of interest at the NB and $L_{NB-RN}$ is the propagation loss on the RN to UE link. Again, it is assumed that no intra-cell interference exists.

The overall throughput across the multi-hop link will be limited by the lower of the two SINR values as this will limit the rate at which data can be transmitted to that entity. Any increase in transmit power that causes an SINR imbalance will not improve the performance of the multi-hop system; it will simply result in wasted energy and an increase in interference to any co-channel users.

Thus, assuming that the receiver at the intermediate RN and the receiver at the destination UE perform the same, then it follows that the transmit power at the NB and RN should be set such that the SINR at the RN and UE is the same. Using this criterion for setting the ratio of the transmit powers, it follows that the ratio is given by:

$$\frac{P_{tx,NB}}{P_{tx,RN}} = \frac{L_{NB-RN}}{L_{RN-UE}} = \frac{b_1 s_1^{n_1}}{b_2 s_2^{n_2}} \tag{3}$$

Where $b_1$ and $n_1$ are the pathloss parameters for the NB to RN link which is $s_1$ in length and $b_2$, $n_2$ and $s_2$ are associated with the RN to UE link. Thus using equation (3) it is possible to find either transmit power given the other.

1B. Regenerative relay with FDD - two cell model as shown in Figure 1B

In this case, transmit power equations may be derived taking into account interference caused by transmissions arising in the other cell.

In this case the SINR at a destination UE that is operable to receive signals from an intermediate RN is now :

$$SINR_{RN-UE} = \frac{G_p P_{tx,RN}}{L_{RN-UE}\left(N + \dfrac{G_p P_{tx,RN}}{L_{RN-UE}}\right)} \tag{4}$$

The optimal NB transmit power can be found by setting (4) and (2) to be equal. Therefore:

$$P_{tx,NB} = \frac{L_{NB-RN} N P_{tx,RN}}{L_{RN-UE}\left(N + \dfrac{G_p P_{tx,RN}}{L_{RN-UE}}\right)}$$
$$= \frac{L_{NB-RN} P_{tx,RN}}{\left(L_{RN-UE} + \dfrac{G_p P_{tx,RN}}{N}\right)} \tag{5}$$

(5) can be rearranged to find the intermediate RN transmit power given the source NB transmit power:

$$P_{tx,RN} = \frac{L_{RN-UE}}{\left(\dfrac{L_{NB-RN}}{P_{tx,NB}} - \dfrac{G_p}{N}\right)} \tag{6}$$

2A. Regenerative relay with TDD: single cell model - Figure 1A

It is assumed that the two links (source to intermediate, intermediate to destination) operate on the same frequency with TDD being used to separate the receive and transmit operation of the RN (i.e. it is no longer full duplex). If it is assumed that the timeslot in which the RN transmits is not used by the NB then the equations described above for the case of a regenerative relay with an FDD duplexing scheme can be used. However, if the source NB uses the same timeslot as the intermediate RN to communicate with apparatuses or nodes other than the RN, interference will result to the transmission made by the RN. In this case the SINR at a destination UE that is operable to receive communication signals from an intermediate RN is given by:

$$SINR_{RN-UE} = \frac{G_p P_{\alpha,RN}}{L_{RN-UE}(N+I)}$$

$$= \frac{G_p P_{\alpha,RN}}{L_{RN-UE}\left(N + \dfrac{P_{\alpha\_tot,NB}}{L_{NB-UE}}\right)} \qquad (7)$$

Where $P_{\alpha\_tot,NB}$ is the total transmission power from the NB and $L_{NB-UE}$ is the propagation loss on the NB to UE link. In this case the transmit power at the RN that ensures equal SINR is given by:

$$P_{\alpha,RN} = P_{\alpha,NB}\left(\frac{L_{RN-UE}}{L_{NB-RN}}\right)\left(1 + \frac{P_{\alpha\_tot,NB}}{NL_{NB-UE}}\right) \qquad (8)$$

Comparing equation (3) and equation (8) it is apparent that a simple ratio no longer yields the ideal balance. Assuming that $P_{\alpha\_tot,NB} = G_p P_{\alpha,NB}$ it is possible to write equation (8) as:

$$\begin{aligned} P_{\alpha,RN} &= P_{\alpha,NB}\left(\frac{L_{RN-UE}}{L_{NB-RN}}\right)\left(1 + \frac{G_p P_{\alpha,NB}}{NL_{NB-UE}}\right) \\ &= \left(\frac{L_{RN-UE}}{L_{NB-RN}}\right)\left(P_{\alpha,NB} + \frac{G_p P_{\alpha,NB}^2}{NL_{NB-UE}}\right) \end{aligned} \qquad (9)$$

From (9) it is possible to determine the ideal RN transmit power given the NB transmit power. It is worth noting that if the set-up of the system is arranged such that the second term in the second bracket is negligible (i.e. $P_{tx\_tot,NB}/NL_{NB-UE} \ll 1$) then the criterion described above for the case of a regenerative relay with an FDD duplex scheme can be used.

It follows that the ideal NB transmit power given a certain RN transmit power can be found from the roots of (9). Expressing (9) in the following simplified form:

$$\frac{L_{RN-UE}}{L_{NB-RN}}P_{\alpha,NB} + \frac{L_{RN-UE}}{L_{NB-RN}}\frac{G_p}{NL_{NB-UE}}P_{\alpha,NB}^2 - P_{\alpha,RN} = 0 \qquad (10)$$

$$ax^2 + bx + c = 0$$

Where $x = P_{tx,NB}$, $a = \dfrac{G_p L_{RN-UE}}{NL_{NB-RN}L_{NB-UE}}$, $b = \dfrac{L_{RN-UE}}{L_{NB-RN}}$ and $c = -P_{tx.RN}$ it follows that the roots of (10) are given by:

$$x = \frac{-b \pm \sqrt{b^2 - 4ac}}{2a} \qquad (11)$$

As the constants a, b and the transmit power are always a positive number, only one root is defined, it therefore follows that the optimal transmit power at the NB that ensures equal SINR at the RN and UE is given by:

$$x = P_{\alpha,NB} = \frac{-b + \sqrt{b^2 + 4aP_{\alpha,RN}}}{2a} \tag{12}$$

Finally, it is possible to use the definitions above to rewrite (9), which gives the optimal RN transmit power, in a similar simplified form:

$$P_{\alpha,RN} = bP_{\alpha,NB} + aP_{\alpha,NB}^2 \tag{13}$$

2A. Regenerative relay with TDD: two-cell model as shown in Figure 1B

In addition to assuming that the deployment in both is identical and that the transmit powers on the NB and RN are the same, it is also assumed that where appropriate $P_{\alpha\_tot,RN} = G_p P_{tx,RN}$ and $P_{\alpha\_tot,NB} = G_p P_{\alpha,NB}$ and that for the case of TDD both RN's transmit at the same time. This in effect generates the worse case scenario for two cells.
In this case the SINR at the destination UE that is operable to receive signals from an intermediate RN is now:

$$SINR_{RN-UE} = \frac{G_p P_{\alpha,RN}}{L_{RN-UE}\left(N + \frac{2G_p P_{\alpha,NB}}{L_{NB-UE}} + \frac{G_p P_{\alpha,RN}}{L_{RN-UE}}\right)} \tag{14}$$

The optimal NB transmit power can be found by setting (14) and (2) to be equal:

$$\frac{G_p P_{\alpha,NB}}{NL_{NB-RN}} = \frac{G_p P_{\alpha,RN}}{L_{RN-UE}\left(N + \frac{2G_p P_{\alpha,NB}}{L_{NB-UE}} + \frac{G_p P_{\alpha,RN}}{L_{RN-UE}}\right)}$$

$$P_{\alpha,RN} = P_{\alpha,NB}\left(\frac{L_{RN-UE}}{L_{NB-RN}}\right)\left(1 + \frac{2P_{\alpha\_tot,NB}}{NL_{NB-UE}} + \frac{P_{\alpha\_tot,RN}}{NL_{RN-UE}}\right) \tag{15}$$

$$\left(\frac{L_{RN-UE}}{L_{NB-RN}}\right)\left(\frac{2G_p}{NL_{NB-UE}}\right)P_{\alpha,NB}^2 + \left(\frac{L_{RN-UE}}{L_{NB-RN}}\right)\left(1 + \frac{G_p P_{\alpha,RN}}{NL_{RN-UE}}\right)P_{\alpha,NB} - P_{\alpha,RN}$$

The optimal NB transmit power is found from the positive root of:

$$\left(\frac{L_{RN-UE}}{L_{NB-RN}}\right)\left(\frac{2G_p}{NL_{NB-UE}}\right)P_{\alpha,NB}^2 + \left(\frac{L_{RN-UE}}{L_{NB-RN}}\right)\left(1 + \frac{G_p P_{\alpha,RN}}{NL_{RN-UE}}\right)P_{\alpha,NB} - P_{\alpha,RN} = 0 \tag{16}$$

Which is given by:

$$x = P_{\alpha,NB} = \frac{-b + \sqrt{b^2 - 4ac}}{2a} \tag{17}$$

Where in this case

$$a = \frac{2G_p L_{RN-UE}}{NL_{NB-RN} L_{NB-UE}} \;,\; b = \frac{L_{RN-UE}}{L_{NB-RN}} \left( 1 + \frac{G_p P_{\alpha,RN}}{NL_{RN-UE}} \right)$$

and

$$c = -P_{\alpha,RN} \;,$$

and both *b* and *c* are a function of the RN transmit power.

Given the NB transmit power it is possible to rearrange (15) to find the RN transmit. It follows that the optimal RN transmit power is given by:

$$P_{\alpha,RN} = \frac{\left( \dfrac{2G_p}{NL_{NB-UE}} \dfrac{L_{RN-UE}}{L_{NB-RN}} \right) P_{\alpha,NB}^2 + \left( \dfrac{L_{RN-UE}}{L_{NB-RN}} \right) P_{\alpha,NB}}{1 - \left( \dfrac{G_p}{NL_{RN-UE}} \dfrac{L_{RN-UE}}{L_{NB-RN}} \right) P_{\alpha,NB}} \qquad (18)$$

3A. Non-regenerative relay node (RN) with FDD - single cell model as shown in Figure 1A

The difference between this case and that of a regenerative relay node being used in conjunction with a FDD duplexing scheme is that the SINR at the UE *is a function of* the SINR at the RN, where the SINR at the destination UE which is connected to the RN is given by:

$$SINR_{RN-UE} = \frac{G_p P_{\alpha,RN}}{L_{RN-UE} \left( N + \dfrac{P_{\alpha,RN}}{L_{RN-UE} SINR_{NB-RN}} \right)} \qquad (19)$$

The result is that the ideal balance is no longer derived from setting the SINR at the UE equal to that at the RN. According to (19), the SINR at the RN needs to be set so that it does not prevent this target SINR at the UE from being obtained. However, the NB power must be controlled to limit the SINR at the RN rising beyond that practically required else excess interference and wasted transmit power will result.

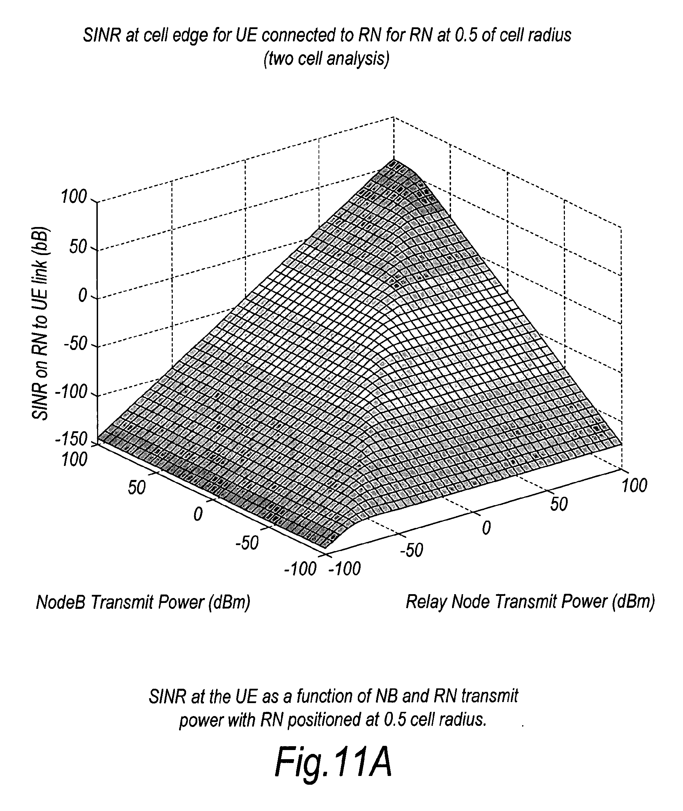

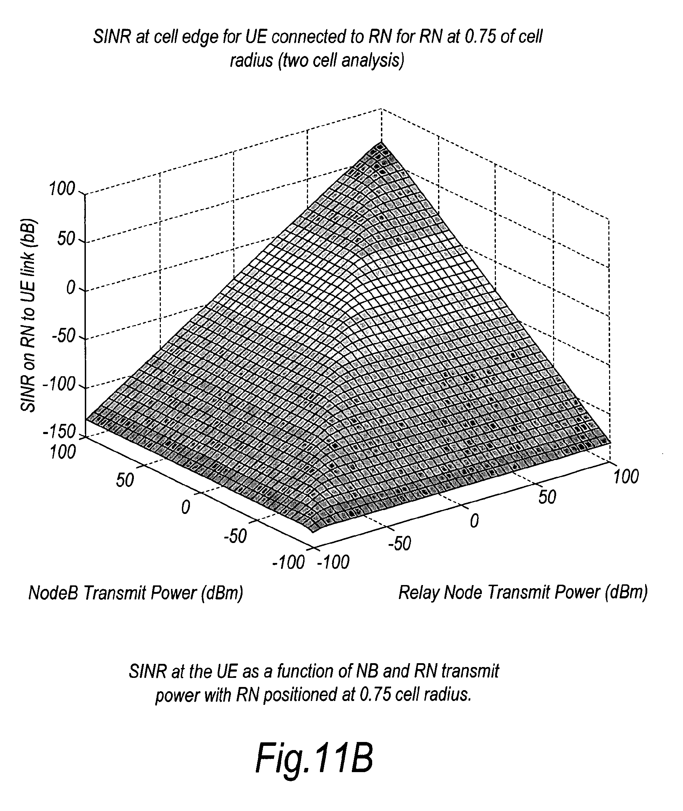

Figures 11A and 11B illustrate how the setting of NB and RN transmit power affects the SINR at the UE connected to the RN for a two different deployment scenarios.

Thus, it can be seen that the optimal solution is to select the transmit power of the NB and RN such that the system effectively operates on the diagonal fold in the surface shown in Figure 6. It is possible to realise such a solution by taking the first derivative of (19) and finding the point at which increasing either the NB or RN transmit power results in minimal increase to SINR at UE.

In order to determine the first derivative of (19), it is rewritten as:

$$SINR_{RN-UE} = \frac{G_p P_{tx,RN}}{L_{RN-UE}\left(N + \dfrac{P_{tx,RN}}{L_{RN-UE}\dfrac{G_p P_{tx,NB}}{NL_{NB-RN}}}\right)} \qquad (20)$$

$$= \frac{1}{\left(\dfrac{NL_{RN-UE}}{G_p P_{tx,RN}}\right) + \left(\dfrac{NL_{NB-RN}}{G_p^2 P_{tx,NB}}\right)}$$

Defining

$$y = SINR_{RN-UE}, \quad k_1 = \frac{NL_{RN-UE}}{G_p} \quad \text{and} \quad k_2 = \frac{NL_{NB-RN}}{G_p^2}$$

it is possible to simplify (20) to be:

$$y = \frac{1}{\dfrac{k_1}{P_{tx,RN}} + \dfrac{k_2}{P_{tx,NB}}} = \frac{P_{tx,NB}}{\dfrac{k_1 P_{tx,NB}}{P_{tx,RN}} + k_2} \qquad (21)$$

In order to find the rate of change of SINR with $P_{\alpha,NB}$ the quotient rule for differentiation is used:

$$\frac{dy}{d(P_{tx,NB})} = \frac{k_2}{\left(\dfrac{k_1}{P_{tx,RN}} P_{tx,NB} + k_2\right)^2} = \nabla_{NB} \qquad (22)$$

By solving (22) for $P_{\alpha,NB}$ given the required gradient and $P_{\alpha,RN}$ it is possible to find the optimal NB transmit power:

$$P_{tx,NB} = \frac{P_{tc,RN}\left(\sqrt{\dfrac{k_2}{\nabla_{NB}}} - k_2\right)}{k_1} \qquad (23)$$

In order to find the optimal RN transmit power given that of the NB, the differentiation of (21) is now performed with respect to $P_{tx,RN}$. In this case the first order derivative is given by:

$$\frac{dy}{d(P_{tx,RN})} = \frac{k_1}{\left(\dfrac{k_2}{P_{tx,NB}} P_{tx,RN} + k_1\right)^2} = \nabla_{RN} \qquad (24)$$

And the optimal RN transmit power given that of the NB is:

$$P_{tx,RN} = \frac{P_{tc,NB}\left(\sqrt{\dfrac{k_1}{\nabla_{RN}}} - k_1\right)}{k_2}$$

(25)

3B. Non-regenerative relay node (RN) with FDD - two cell model as shown in Figure 1B

In a two cell model the SINR for the worse case of a destination UE at the cell edge is given by:

$$SINR_{RN-UE} = \frac{G_p P_{tx,RN}}{L_{RN-UE}\left(N + \dfrac{P_{tx,RN}}{L_{RN-UE} SINR_{NB-RN}} + \dfrac{G_p P_{tx,RN}}{L_{RN-UE}}\right)}$$
$$= \frac{1}{\left(\dfrac{NL_{RN-UE}}{G_p P_{tx,RN}}\right) + \left(\dfrac{NL_{NB-RN}}{G_p^2 P_{tx,NB}}\right) + 1}$$

(26)

Assuming that the transmit power of the two RN's is equal, the deployment is identical across the two cells and that $P_{tx\_tot,RN} = G_p P_{tx,RN}$, then the simplified form of (26) is given by:

$$SINR_{RN-UE} = \frac{1}{\dfrac{k_1}{P_{tx,RN}} + \dfrac{k_2}{P_{tx,NB}} + 1}$$
$$= \frac{P_{tx,NB}}{\left(\dfrac{k_1}{P_{tx,RN}} + 1\right)P_{tx,NB} + k_2}$$

(27)

The first derivative is now:

$$\frac{dy}{d(P_{tx,NB})} = \frac{k_2}{\left(\left(\dfrac{k_1}{P_{tx,RN}} + 1\right)P_{tx,NB} + k_2\right)^2}$$

(28)

Thus the optimal NB transmit power can be found by:

$$P_{tx,NB} = \frac{P_{tx,RN}\sqrt{\dfrac{k_2}{\nabla}} - k_2}{k_1 + P_{tx,RN}}$$

(29)

The optimal RN transmit power is found by taking the derivative of (27) with respect to $P_{tx,RN}$:

$$\frac{dy}{d\left(P_{tx,RN}\right)} = \frac{k_1}{\left(\left(\frac{k_2}{P_{tx,NB}}+1\right)P_{tx,RN}+k_1\right)^2} \quad (30)$$

Thus the optimal RN transmit power can be found by:

$$P_{tx,RN} = \frac{P_{tx,NB}\sqrt{\dfrac{k_1}{\nabla}}-k_1}{k_2+P_{tx,NB}} \quad (31)$$

4A - Non-regenerative relay with TDD - single cell model as shown in Figure 1A

This case is similar to that described above for a non-regenerative except for the fact that now interference from the NB must be taken into account due to the fact that it transmits on the same frequency and at the same time as the RN. In this case the SINR at the UE which is receiving communication signals transmitted by the RN is given by:

$$SINR_{RN-UE} = \frac{G_p P_{tx,RN}}{L_{RN-UE}\left(N+\dfrac{P_{tx,RN}}{L_{RN-UE}SINR_{NB-RN}}+\dfrac{P_{tx\_tot,NB}}{L_{NB-UE}}\right)} \quad (32)$$

If the $P_{tx,NB}/P_{tx,RN}$ is too large then the SINR at the UE is limited due to insufficient RN transmit power and it is likely the area in which the link performance of a connection to a RN outperforms that for a connection to the NB is reduced. Conversely, if it is too small then the SINR at the UE is limited by the low SINR at the RN.

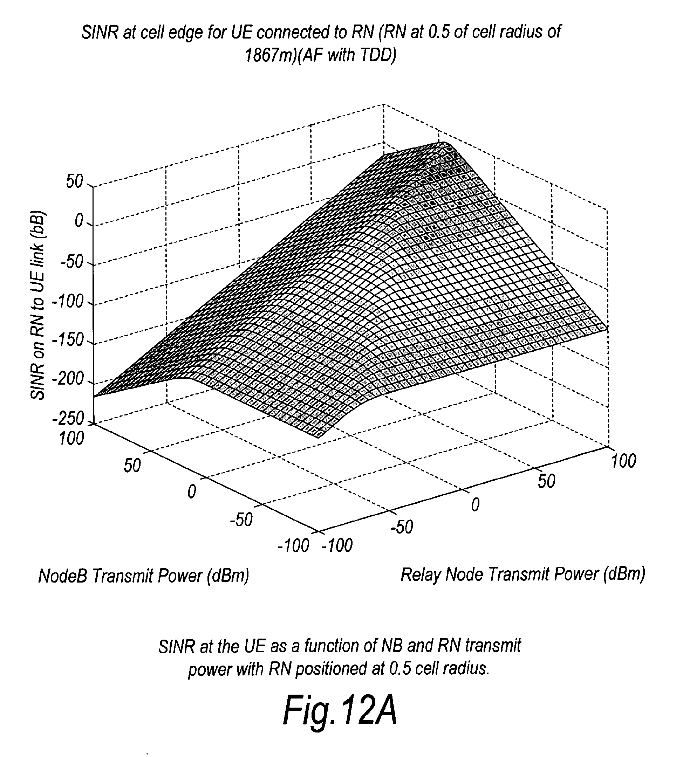

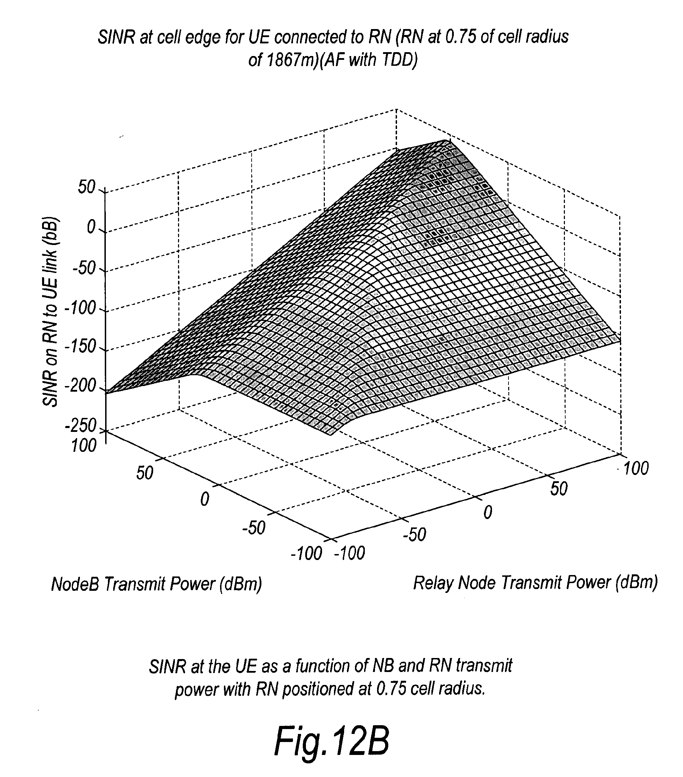

In this case, the balance is even finer than of that described in the case of a non-regenerative relay node employed in conjunction with an FDD duplexing scheme, as illustrated by Figures 12A and 12B. The optimal operating point is given by finding the point at which the first derivative of (32) is equal to zero. In order to find this optimal point, (32) is first rearranged in the following form:

$$SINR_{RN-UE} = \frac{G_p P_{tx,RN}}{L_{RN-UE}\left(N+\dfrac{P_{tx,RN}}{L_{RN-UE}\left(\dfrac{G_p P_{tx,NB}}{NL_{NB-RN}}\right)}+\dfrac{P_{tx\_tot,NB}}{L_{NB-UE}}\right)}$$

$$= \frac{1}{\left(\dfrac{NL_{RN-UE}}{G_p P_{tx,RN}}\right)+\left(\dfrac{NL_{NB-RN}}{G_p^2 P_{tx,NB}}\right)+\left(\dfrac{L_{RN-UE}P_{tx,NB}}{L_{NB-UE}P_{tx,RN}}\right)} \quad (33)$$

Defining

$$y = SINR_{RN-UE}, \quad k_1 = \frac{NL_{RN-UE}}{G_p} \text{ and } k_2 = \frac{NL_{NB-RN}}{G_p^2}$$

Using the definitions from the description in 3A above and

$$k_3 = \left( \frac{L_{RN-UE}}{L_{NB-UE}} \right)$$

it is possible to simplify (33) to:

$$y = \frac{1}{\left( \dfrac{k_1}{P_{\alpha,RN}} \right) + \left( \dfrac{k_2}{P_{\alpha,NB}} \right) + \left( \dfrac{k_3 P_{\alpha,NB}}{P_{\alpha,RN}} \right)} = \frac{P_{\alpha,NB}}{\left( \dfrac{k_1}{P_{\alpha,RN}} \right) P_{\alpha,NB} + k_2 + \left( \dfrac{k_3}{P_{\alpha,RN}} \right) P_{\alpha,NB}^2} \qquad (34)$$

The next step is to find the single maxima of the parabolic function in (34) by solving:

$$\frac{dy}{dx} = 0 \qquad (35)$$

Using the quotient rule to find the first derivative of (34):

$$\frac{dy}{d(P_{\alpha,NB})} = \frac{\dfrac{k_1}{P_{\alpha,RN}} P_{\alpha,NB} + k_2 + \dfrac{k_3}{P_{\alpha,RN}} P_{\alpha,NB}^2 - P_{\alpha,NB} \left( \dfrac{k_1}{P_{\alpha,RN}} + \dfrac{2k_3}{P_{\alpha,RN}} P_{\alpha,NB} \right)}{\left( \dfrac{k_1}{P_{\alpha,RN}} P_{\alpha,NB} + k_2 + \dfrac{k_3}{P_{\alpha,RN}} P_{\alpha,NB}^2 \right)^2} \qquad (36)$$

The maxima of $\gamma$ is found by setting (36) equal to zero and solving for $P_{tx,NB}$. It follows that the maximum SINR at the UE is obtained by setting:

$$\frac{k_1}{P_{\alpha,RN}} P_{\alpha,NB} + k_2 + \frac{k_3}{P_{\alpha,RN}} P_{\alpha,NB}^2 = P_{\alpha,NB}^2 \left( \frac{k_1}{P_{\alpha,RN}} + \frac{2k_3}{P_{\alpha,RN}} P_{\alpha,NB}^2 \right)$$

$$P_{\alpha,NB} = \sqrt{\frac{P_{\alpha,RN} k_2}{2k_3}} \qquad (37)$$

Therefore, given the transmit power of the RN it is possible to use (37) to find the corresponding NB transmit power that ensures maximum SINR at the UE that is connected to the RN.
For the case of finding the optimal RN transmit power given the NB transmit power a similar approach to that described in above in the case of a non-regenerative relay node employed in conjunction with an FDD duplexing scheme, can be used as the SINR at the UE is not a parabolic function of RN transmit power. In order to find the optimal RN

**EP 1 801 995 A1**

transmit power, (34) is rearranged to the following:

$$y = \cfrac{1}{\left(\cfrac{k_1}{P_{\alpha,RN}}\right) + \left(\cfrac{k_2}{P_{\alpha,NB}}\right) + \left(\cfrac{k_3 P_{\alpha,NB}}{P_{\alpha,RN}}\right)} = \cfrac{P_{\alpha,RN}}{\left(\cfrac{P_{\alpha,RN} k_2}{P_{\alpha,NB}}\right) + k_3 P_{\alpha,NB} + k_1} \qquad (38)$$

The first derivative is now:

$$\frac{dy}{d(P_{\alpha,RN})} = \frac{k_3 P_{\alpha,NB} + k_1}{\left(\left(\cfrac{P_{\alpha,RN} k_2}{P_{\alpha,NB}}\right) + k_3 P_{\alpha,NB} + k_1\right)^2} = \nabla \qquad (39)$$

Solving (39) for $P_{tx.RN}$ gives the optimal RN transmit power given the NB transmit power:

$$P_{\alpha,RN} = \frac{P_{\alpha,NB}\left(\sqrt{\cfrac{k_3 P_{\alpha,NB} + k_1}{\nabla}} - (k_3 P_{\alpha,NB} + k_1)\right)}{k_2} \qquad (40)$$

By observing the surface in Figure 12A or 12B and from the form of (34) and the result in (40) it is apparent that if the NB transmit power is small then the rate of change of SINR with RN transmit power will decrease with increasing RN transmit power. However, for the case of large NB transmit power, the SINR at the UE approximates to a linear function of RN transmit power. The result is that in this case the solution to the problem, as summarised in (40) will be infinite.

4B - Non-regenerative relay with TDD - two cell model as shown in Figure 1B

The worse case, from the perspective of a UE at the cell edge, is when the neighbouring cell employs a TDD scheme with the same timeslot used for RN transmission. If it is assumed that the cells are equal in size with the same deployment and transmit power settings and that $P_{tx\_tot,RN/NB} = G_p P_{tx,RN/NB}$ then:

$$SINR_{RN-UE} = \cfrac{G_p P_{\alpha,RN}}{L_{RN-UE}\left(N + \cfrac{P_{\alpha,RN}}{L_{RN-UE} SINR_{NB-RI}} + \cfrac{2 G_p P_{\alpha,NB}}{L_{NB-UE}} + \cfrac{G_p P_{\alpha,RN}}{L_{RN-UE}}\right)}$$

$$= \cfrac{1}{\left(\cfrac{N L_{RN-UE}}{G_p P_{\alpha,RN}}\right) + \left(\cfrac{N L_{NB-RN}}{G_p^2 P_{\alpha,NB}}\right) + \left(\cfrac{2 L_{RN-UE} P_{\alpha,NB}}{L_{NB-UE} P_{\alpha,RN}}\right) + 1} \qquad (41)$$

In this case the simplified form of (4) is:

$$SINR_{RN-UE} = \cfrac{1}{\cfrac{k_1}{P_{tx,RN}} + \cfrac{k_2}{P_{tx,NB}} + \cfrac{2k_3}{P_{tx,RN}} P_{tx,NB} + 1}$$

$$= \cfrac{P_{tx,NB}}{\left(\cfrac{k_1}{P_{tx,RN}} + 1\right) P_{tx,NB} + k_2 + \cfrac{2k_3}{P_{tx,RN}} P_{tx,NB}^2} \qquad (42)$$

And the first derivative is:

$$\cfrac{dy}{d(P_{tx,NB})} = \cfrac{\left(\cfrac{k_1}{P_{tx,RN}} + 1\right) P_{tx,NB} + k_2 + \cfrac{2k_3}{P_{tx,RN}} P_{tx,NB}^2 - P_{tx,NB}\left(\cfrac{k_1}{P_{tx,RN}} + 1 + \cfrac{4k_3}{P_{tx,RN}} P_{tx,NB}\right)}{\left(\left(\cfrac{k_1}{P_{tx,RN}} + 1\right) P_{tx,NB} + k_2 + \cfrac{2k_3}{P_{tx,RN}} P_{tx,NB}^2\right)^2} \qquad (43)$$

Finally, the maxima is given by setting (43) equal to zero and solving for $P_{tx.NB}$:

$$\left(\cfrac{k_1}{P_{tx,RN}} + 1\right) P_{tx,NB} + k_2 + \cfrac{2k_3}{P_{tx,RN}} P_{tx,NB}^2 = P_{tx,NB}\left(\cfrac{k_1}{P_{tx,RN}} + 1 + \cfrac{4k_3}{P_{tx,RN}} P_{tx,NB}\right)$$

$$k_2 + \cfrac{2k_3}{P_{tx,RN}} P_{tx,NB}^2 = \cfrac{4k_3}{P_{tx,RN}} P_{tx,NB}^2 \qquad (44)$$

$$P_{tx,NB} = \sqrt{\cfrac{P_{tx,RN} k_2}{2k_3}}$$

In order to find the optimal RN transmit power given the NB transmit power (42) is rearranged to:

$$y = \cfrac{1}{\cfrac{k_1}{P_{tx,RN}} + \cfrac{k_2}{P_{tx,NB}} + \cfrac{2k_3}{P_{tx,RN}} P_{tx,NB} + 1}$$

$$= \cfrac{P_{tx,RN}}{k_1 + \cfrac{k_2 P_{tx,RN}}{P_{tx,NB}} + 2k_3 P_{tx,NB} + P_{tx,RN}} \qquad (45)$$

The first derivative is now:

$$\cfrac{dy}{d(P_{tx,RN})} = \cfrac{k_1 + 2k_3 P_{tx,NB}}{\left(k_1 + 2k_3 P_{tx,NB} + P_{tx,RN}\left(1 + \cfrac{k_2}{P_{tx,NB}}\right)\right)^2} = \nabla \qquad (46)$$

Solving (46) for $P_{tx,RN}$ gives the optimal RN transmit power given the NB transmit power:

$$P_{tx,RN} = \frac{P_{tx,NB} \sqrt{\dfrac{k_1 + 2k_3 P_{tx,NB}}{\nabla}} - \left(k_1 + 2k_3 P_{tx,NB}\right)}{\left(P_{tx,NB} + k_2\right)} \qquad (47)$$

Again, in the case of large NB transmit power, the SINR at the UE approximates to a linear function of RN transmit power. The result is that the solution to (47) will be infinite.

The optimal transmit power balance will now be determined based on the solutions developed above for the different relay and duplexing schemes and for two separate deployment scenarios. These deployment scenarios are summarised in Table III and the propagation parameters of the pathloss equation in (48) are in Table IV.

$$L = b + 10n \log d \qquad (48)$$

Where $L$ is the pathloss in dB, $b$ is in dB and is given in Table along with $n$, and $d$ is the transmitter-receiver separation in metres.

**Table III. Deployment scenarios**

| Parameter | Scenario 1 | Scenario 2 |
|---|---|---|
| Cell Radius | 1867m | |
| Relay Position | 933m | 1400m |

The transmitter receiver separation is the same as the cell radius (i.e. the UE is located at the cell radius). The RN position quoted is relative to the centre of the cell which is where the NB is located. The RN positions are therefore the distance from the NB to the RN. The RN-UE is then the difference of the cell radius and the NB-RN separation.

**Table IV. Propagation parameters.**

| Parameter | Link NB-UE | NB-RN | RN-UE |
|---|---|---|---|
| b (dB) | 15.3 | 15.5 | 28 |
| n | 3.76 | 3.68 | 4 |

Regenerative relay

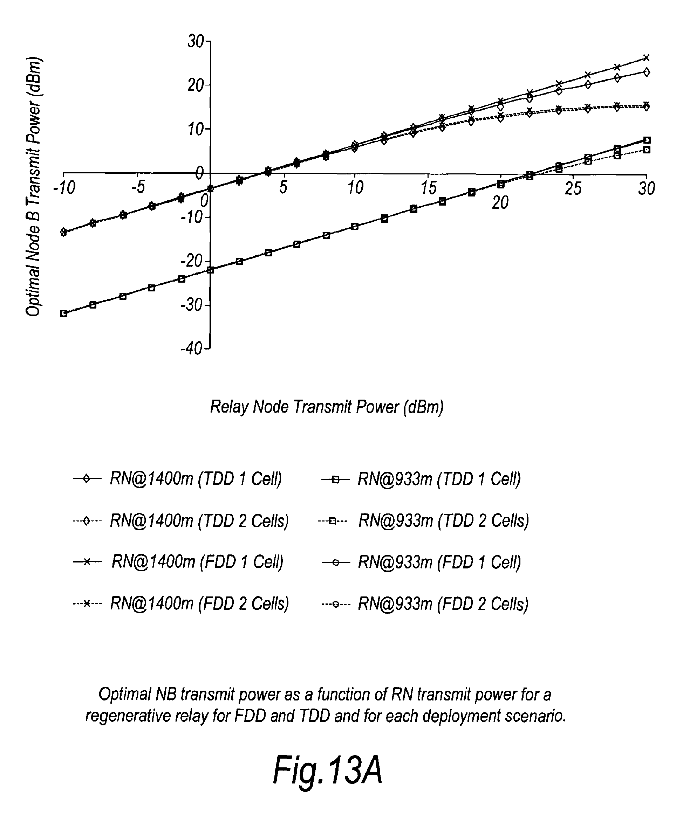

Substituting the values given in Table III and Table IV into equations (3) and (5) for FDD and (12) and (17) for TDD it is possible to find the optimal NB transmit power given the RN transmit power. Figure 13A shows the optimal NB transmit power as a function of RN transmit power for both FDD and TDD for the two deployment scenarios.

Non-Regenerative relay with FDD

Substituting the parameters into (23) and (24) it is possible to find the optimal NB transmit power for the two deployment scenarios, as shown in Figure 8B.

Non-Regenerative relay with TDD

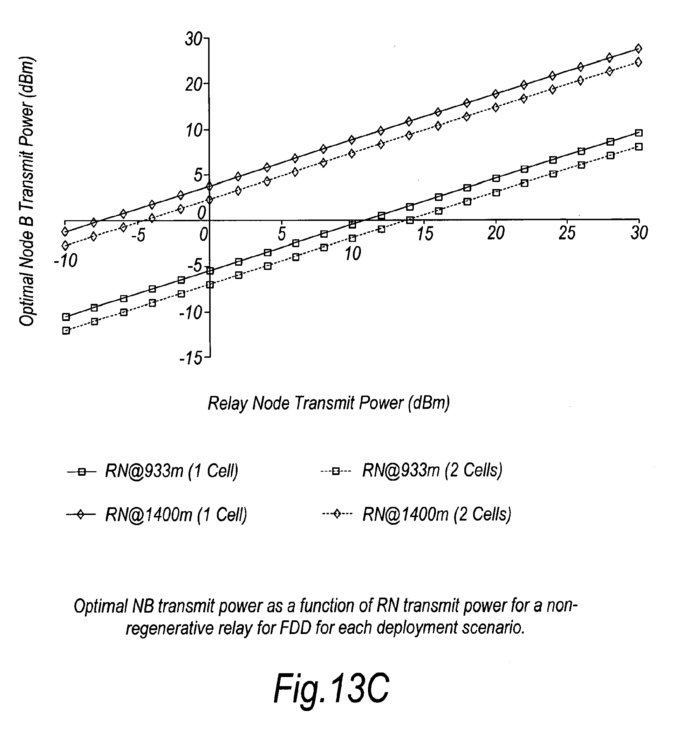

Substituting the parameters into (37) and (44) it is possible to find the optimal NB transmit power for the two deployment scenarios, as shown in Figure 13C.

System level simulation results

System simulation of a multi-hop HSDPA network employing non-regenerative relays with TDD duplexing with relays transmitting in every third transmission time interval have been conducted in order to validate the predicted optimal transmit power setting based on results of Figure 13C, with the average packet call throughput gain being determined as the transmit powers of the RN and NB are varied around the optimal point.

Results of a system level simulation for the two deployment scenarios detailed above in Table III will now be presented. The simulation parameters are listed below in Table V and Table VI.

**Table V. Deployment parameters**

| Parameter | | Value |
|---|---|---|
| Base Station | Inter-cell Separation | 2.8 km |
| | Sectors/cell | 3 |
| | Antenna Height | 15 m |
| | Antenna Gain | 17 dBi |
| Relay Station | RN antenna | 120° |
| | Position | ½ and ¾ cell radius |
| | Num/cell | 9 |
| | Antenna Height | 5 m |
| | Antenna Gain | 17 dBi |
| User Equipment | Number per sector | 50 |
| | Initial Distribution | Random |
| | Velocity | 3 km/h |
| | Direction | Semi-directed |
| | Update | 20 m |
| Traffic Models | | WWW |

**Table VI. Simulation parameters**

| Parameters | | Value |
|---|---|---|
| Base Station/Relay Node | HS-DSCH power | Variable |
| | CPICH power | 20% of total |
| | HARQ scheme | Chase |
| | HS-DSCH/frame | 15 |
| | Relay buffer size | 1.78 Mbits |
| | Ack/NAck Detection | Error free |
| | NB Scheduler | Round Robin |
| | Relay type | Amplify & Forward |
| User Equipment | | 10 |
| | Thermal Noise Density | -174 dBm/Hz |
| | Noise Figure | 5dBm |
| | Detector | MMSE |

For both deployment scenarios the gain in the average packet call throughput experienced by the users on that observed for the case of a single hop system with NB transmission power of 30dBm is plotted as a function of NB transmit power for four different RN transmit powers. Figure 14A shows the gain for deployment scenario 1 and Figure 14B shows the gain for scenario 2.

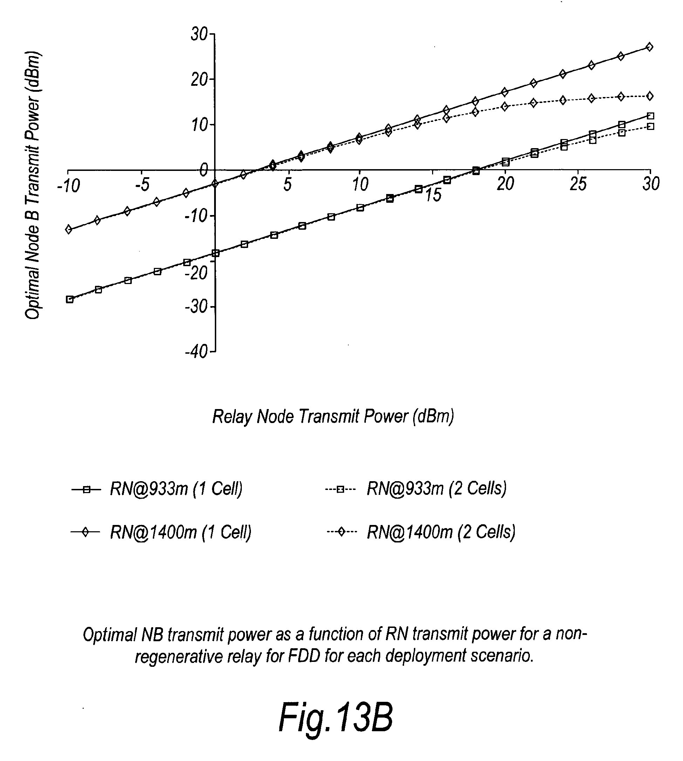

Note that the channel gain for the NB to UE link was 3dB higher than for the NB to RN and RN to UE link. This means that the interference experienced by a UE connected to a RN from another NB is double that used in the link analysis discussed above with reference to Figures 13A, 13B and 13C.

The channel gain is due to the fact that a number of replicas of the transmitted signal are received, when the power on all these is added it is found that for the case of the NB to UE channel the total power is double that on the NB to RN or RN to UE channel.

This accounts for the 3dB gain, as 3dB equates to double. As a result of the channel gain being higher for the NB to UE channel, this means that the received signal power will be 3dB (or double) higher than that used in the analysis up to that point where no channel gain through multi-path was considered.

Comparison of link based prediction and system simulation

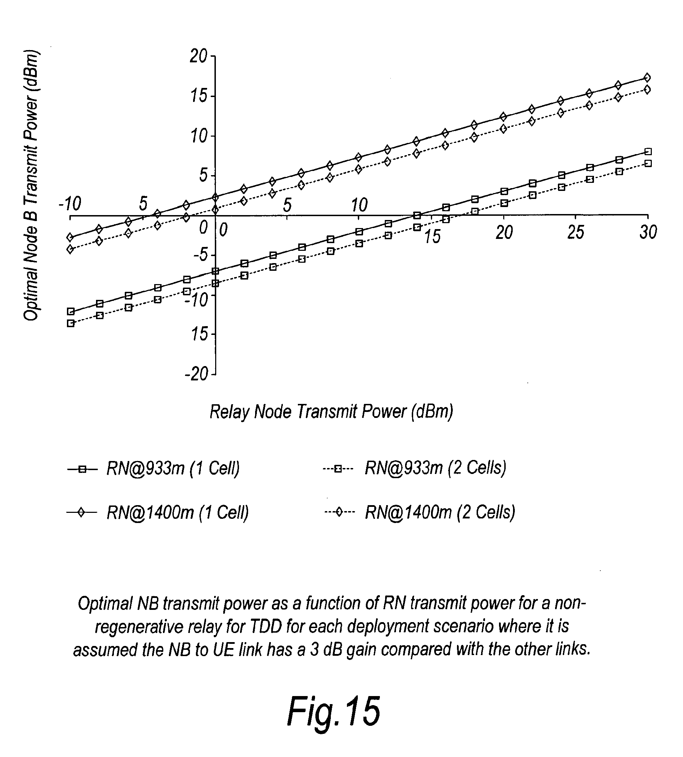

Figure 15 shows the optimal NB transmit power as a function of RN transmit power for a non-regenerative relay for TDD for each deployment scenario where it is assumed the NB to UE link has a 3dB gain compared with the other links. In this case, the predicted transmit power at the NB for the RN transmit power used in the simulation are listed in Table VII along with the throughput gain that would be experienced if these settings were used and the maximum achievable.

**Table VII. Predicted optimal NB transmit power and resulting simulated throughput gain that would have been achieved from this setting compared with the maximum gain observed.**

| RN Transmit Power (dBm) | NB Transmit Power (dBm) & User Packet Throughput Gain | | | | | |
|---|---|---|---|---|---|---|
| | | Scenario 1 | | | Scenario 2 | |
| | Predicted | Throughput Gain | Max Gain | Predicted | Throughput Gain | Max Gain |
| 16 | -0.5 | 33% | 40% | 8.8 | 60% | 67% |
| 19 | 1 | 38% | 43% | 10.3 | 65% | 74% |
| 22 | 2.5 | 41% | 46% | 11.8 | 68% | 74% |
| 25 | 4 | 49% | 51% | 13.3 | 72% | 75% |

Table VII, Figure 13A and Figure 14B suggest that if power balancing is performed according to a preferred embodiment of the present invention using a technique based on the equations developed above then the selected power balance will in general be in the region of the optimal point. In particular, for the transmit powers used the gain was shown to always be within 10% of the achievable maximum, with the difference being due to shortcomings of using of a two-cell model to model a multi-cell system.

The necessity of transmit power balancing is apparent in the results presented in both Figure 14A and Figure 14B where it is shown that if the NB transmit is increased beyond the optimal point then a significant degradation in gain will be experienced despite the emission of more signal energy. It also shows that if the NB transmit power is selected carefully then the sensitivity of the gain to RN transmit power is reduced.

**Claims**

**1.** A multi-hop communication system comprising at least three communication apparatuses, one said communication apparatus comprising a source apparatus, another said communication apparatus comprising a destination apparatus and each of the other said communication apparatus(es) comprising an intermediate apparatus, said source apparatus being operable to transmit a communication signal in a communication direction towards the destination apparatus via the, or each, intermediate apparatus, wherein the, or each, intermediate apparatus is operable to receive a communication signal from a previous communication apparatus in said communication direction and to transmit said communication signal, or a signal derived therefrom, to a subsequent apparatus in said communication direction,

the communication system further comprising a resource control means operable to determine a measure of, or a change in a measure of, the transmission resource allocated to one or more of the source apparatus and the, or each, intermediate apparatus, that will tend to substantially attain or maintain a balance between:

  i) a measure of the quality of the communication signal received at the destination apparatus; and
  ii) a measure of the quality of the communication signal received at the, or each, intermediate apparatus,

wherein at least one communication apparatus comprises an administrative signal processing means operable to receive one or more administrative signals from a previous communication apparatus in a signalling direction, and to derive:

a) an absolute administrative signal which is indicative of an absolute value derived by a communication apparatus of the multi-hop system; and
b) at least one relative administrative signal which is indicative of a value derived by another communication apparatus of the multi-hop system relative to said absolute value, wherein said communication apparatus is further operable to transmit said absolute administrative signal and said at least one relative administrative signal to a subsequent communication apparatus in said signalling direction.

2. A multi-hop communication system as claimed in claim 1, wherein the absolute administrative signal derived by said administrative signal processing means comprises an absolute value derived by said communication apparatus comprising the absolute administrative signal processing means.

3. A multi-hop communication system as claimed in claim 1, wherein the absolute administrative signal derived by said administrative signal processing means comprises an absolute value derived by a previous communication apparatus in a signalling direction.

4. A multi-hop communication system as claimed in any preceding claim, wherein the source apparatus is a part of a base station operable to transmit a communication signal via the, or each, intermediate apparatus, to the destination apparatus.

5. A multi-hop communication system as claimed any one of claims 1 to 3, wherein the destination apparatus is part of a base station operable to receive a communication signal transmitted by said source apparatus via the, or each, intermediate apparatus.

6. A multi-hop communication system as claimed in claim 4 or 5, wherein the resource control means is provided in said base station.

7. A multi-hop communication system as claimed in any one of claims 1 to 5, wherein the resource control means is provided in an intermediate apparatus.

8. A multi-hop communication system as claimed in any preceding claim, wherein said administrative signals are indicative of values relating to the quality of a communication signal received at a communication apparatus of the multi-hop system.

9. A multi-hop communication system as claimed in any preceding claim, wherein said resource control means is operable to receive:

i) an absolute administrative signal which is indicative of an absolute value derived by a communication apparatus of the multi-hop system; and
ii) at least one relative administrative signal which is indicative of a value derived by another communication apparatus of the multi-hop system relative to said absolute value, and to use said absolute and relative administrative signals to determine the measure of, or the change in the measure of, the transmission resource allocated to one or more of the source apparatus and the, or each, intermediate apparatus.

10. A method of transmitting a communication signal, in a communication direction, from a communication apparatus acting as a source apparatus, towards another communication apparatus acting as a destination apparatus, via at least one other communication apparatus acting as an intermediate apparatus, wherein the, or each, intermediate apparatus receives a communication signal from a previous communication apparatus in said communication direction and transmits said communication signal, or a signal derived therefrom, to a subsequent apparatus in said communication direction,
the method comprising the step of determining a measure of, or a change in a measure of, the transmission resource allocated to one or more of the source apparatus and the, or each, intermediate apparatus, that will tend to substantially attain or maintain a balance between:

i) a measure of the quality of the communication signal received at the destination apparatus; and
ii) a measure of the quality of the communication signal received at the, or each, intermediate apparatus,

wherein at least one communication apparatus receives one or more administrative signals from a previous communication apparatus in a signalling direction and derives:

> a) an absolute administrative signal which is indicative of an absolute value derived by a communication apparatus of the multi-hop system; and
> b) at least one relative administrative signal which is indicative of a value derived by another communication apparatus of the multi-hop system relative to said absolute value, said absolute administrative signal and said at least one relative administrative signal being transmitted to a subsequent communication apparatus in said signalling direction.

11. A communication apparatus for use in a multi-hop communication system, said communication apparatus comprising a transmitter and a receiver and being operable to receive a communication signal from a previous communication apparatus in a communication direction and to transmit said communication signal, or a signal derived therefrom, to a subsequent communication apparatus in said communication direction, said communication apparatus comprising administrative signal processing means operable to receive one or more administrative signals from a previous communication apparatus in a signalling direction, and to derive:

> a) an absolute administrative signal which is indicative of an absolute value derived by a communication apparatus of the multi-hop system; and
> b) at least one relative administrative signal which is indicative of a value derived by another communication apparatus of the multi-hop system relative to said absolute value, wherein said communication apparatus is further operable to transmit said absolute administrative signal and the, or each, relative administrative signal to a subsequent communication apparatus in said signalling direction.

12. A communication apparatus as claimed in claim 11, further comprising indicator derivation means, operable to derive an indicator of the quality of a communication signal received by said communication apparatus.

13. A communication apparatus as claimed in claim 11 or 12, wherein the absolute administrative signal derived by said administrative signal processing means comprises an absolute value derived by said communication apparatus.

14. A communication apparatus as claimed in claim 11 or 12, wherein the absolute administrative signal derived by said administrative signal processing means comprises an absolute value derived by a previous communication apparatus in a signalling direction.

15. A communication apparatus as claimed in any one of claims 11 to 14, wherein the communication apparatus comprises an intermediate apparatus in a multi-hop communication system in which a communication signal is transmitted, in a communication direction, from a communication apparatus acting as a source apparatus, towards another communication apparatus acting as a destination apparatus, via the intermediate apparatus, wherein the communication apparatus further comprises:

> a resource control means operable to determine a measure of, or a change in a measure of, the transmission resource allocated to one or more of the source apparatus and the intermediate apparatus, that will tend to substantially attain or maintain a balance between:
>
> > i) a measure of the quality of the communication signal received at the destination apparatus; and
> > ii) a measure of the quality of the communication signal received at the intermediate apparatus.

16. A base station for use in a multi-hop communication system and operable to transmit a communication signal in a communication direction towards a communication apparatus acting as a destination apparatus, via at least one other communication apparatus acting as an intermediate apparatus, the base station comprising a resource control means operable to determine a measure of, or a change in a measure of, the transmission resource allocated to one or more of the source apparatus and the, or each, intermediate apparatus, that will tend to substantially attain or maintain a balance between:

> i) a measure of the quality of the communication signal received at the destination apparatus; and
> ii) a measure of the quality of the communication signal received at the, or each, intermediate apparatus,

wherein the base station is further operable to receive:

a) an absolute administrative signal which is indicative of an absolute value derived by a communication apparatus of the multi-hop system; and

b) al least one relative administrative signal which is indicative of a value derived by another communication apparatus of the multi-hop system relative to said absolute value, and to use said absolute and relative administrative signals to determine the measure of, or the change in the measure of, the transmission resource allocated to one or more of the source apparatus and the, or each, intermediate apparatus.

17. A base station for use in a multi-hop communication system and operable to receive a communication signal transmitted, in a communication direction, by a communication apparatus acting as a source apparatus, via at least one other communication apparatus acting as an intermediate apparatus, the base station comprising a resource control means operable to determine a measure of, or a change in a measure of, the transmission resource allocated to one or more of the source apparatus and the, or each, intermediate apparatus, that will tend to substantially attain or maintain a balance between:

i) a measure of the quality of the communication signal received at the destination apparatus; and

ii) a measure of the quality of the communication signal received at the, or each, intermediate apparatus,

wherein the base station is further operable to receive:

a) an absolute administrative signal which is indicative of an absolute value derived by a communication apparatus of the multi-hop system; and

b) at least one relative administrative signal which is indicative of a value derived by another communication apparatus of the multi-hop system relative to said absolute value, and to use said absolute and relative administrative signals to determine the measure of, or the change in the measure of, the transmission resource allocated to one or more of the source apparatus and the, or each, intermediate apparatus.

18. A computer program which, when loaded into a computer, causes the computer to become an administrative signal processing means of the communication system as claimed in any one of claims 1 to 9.

19. A computer program which, when loaded onto a computer, causes the computer to become a communication apparatus as claimed in any one of claims 11 to 15.

20. A computer program which, when loaded into a computer, causes the computer to become a base station as claimed in claim 16 or 17.

21. A computer program as clamed in claim 18, 19 or 20, carried by a carrier medium.

22. A computer program as claimed in claim 21, wherein said carrier medium is a recording medium.

23. A computer program as claimed in claim 21, wherein said carrier medium is a transmission medium.

EP 1 801 995 A1

$P_{tx,NB}$

$L_{NB-UE}$      $P_{rx,NB-UE}$

$L_{NB-RN}$      $P_{rx,NB-RN}$   $P_{tx,RN}$      $L_{RN-UE}$      $P_{rx,RN-UE}$

UE

Relay Node
($f_c = f_{RN}$)

Basestation
($f_c = f_{NB}$)

## Fig.1A

$P_{tx,NB2}$

$L_{NB2-UE}$      $L_{NB2-RN2}$

$P_{rx,NB1-UE}$   $P_{rx,NB2-UE}$   $P_{rx,NB2-RN2}$

$L_{NB1-UE}$

$P_{tx,NB1}$      $P_{tx,RN2}$

$L_{NB1-RN1}$   $P_{rx,NB1-RN1}$   $P_{tx,RN1}$   $L_{RN1-UE}$   $P_{rx,RN1-UE}$   UE   $P_{rx,RN2-UE}$   $L_{RN2-UE}$

Basestation
($f_c = f_{NB2}$)

Relay Node
($f_c = f_{RN2}$)

Relay Node
($f_c = f_{RN1}$)

Basestation
($f_c = f_{NB1}$)

## Fig.1B

Fig.2A

Fig.2B

EP 1 801 995 A1

RESOURCE
CONTROL
MEANS

NB

$A_{UE}$

$A_{RN_2}$

$A_{RN_1}$

$TRC_{UE}$

$TRC_{RN_2}$

$TRC_{RN_1}$

$RN_1$

$A_{UE}$

$A_{RN_2}$

$TRC_{UE}$

$TRC_{RN_2}$

$RN_2$

$A_{UE}$

UE

C

A

*Fig.3*

*Fig.4*

EP 1 801 995 A1

*Fig.5*

EP 1 801 995 A1

UE

RN

NB

RSS @UE

Receive and
monitor $A_{UE}/A_{UE/RN}$

$A_{UE}$

—11

$A_{UE}/A_{UE/RN}$

Request

Calculate new RN
power (taking limits
into account)

Input propagation
losses

Change in
RN-UE loss
?

No

Calculate new NB
power using
appropriate equation

Yes

Can
NB power be
satisfied
?

No

Revise NB transmit
power and recalculate
RN transmit power

Yes

Change NB transmit
power (must coincide
with RN change)

Change transmit
power according
to received
command from NB

Signal change
in RN transmit
power to RN

Fig.6

UE      *11* RN    $A_{UE}$    NB

RSS at
UE

Receive and
Monitor $A_{UE}$
and $A_{RN}$

$A_{RN}$

Update the
propagation
loss for the RN-
UE and NB-RN
links

Current NB &
RN transmit
power

Any
change in
NB-RN
loss
?
No
Any
change in
RN-UE loss
undetected by
Part 1
?
No
Repeat
algorithm

Yes                              Yes

Calculate new NB
transmit power
using appropriate
equation

Current RN
Transmit
power

Can
NB power be
satisfied
?
No
Revise NB
transmit
power

Yes

Calculate
modification
required to RN
transmit power

Change NB
transmit power
(coincide with
any RN change)

Signal change in
RN transmit
power to RN

Change transmit
power according
to received
command from
NB

Repeat algorithm

*Fig.7*

*Fig.8*

Fig.9

EP 1 801 995 A1

Fig10

SINR at cell edge for UE connected to RN for RN at 0.5 of cell radius
(two cell analysis)

SINR at the UE as a function of NB and RN transmit
power with RN positioned at 0.5 cell radius.

Fig.11A

*SINR at cell edge for UE connected to RN for RN at 0.75 of cell radius (two cell analysis)*

*SINR at the UE as a function of NB and RN transmit power with RN positioned at 0.75 cell radius.*

# Fig.11B

SINR at cell edge for UE connected to RN (RN at 0.5 of cell radius of 1867m)(AF with TDD)

SINR at the UE as a function of NB and RN transmit power with RN positioned at 0.5 cell radius.

*Fig.12A*

SINR at cell edge for UE connected to RN (RN at 0.75 of cell radius of 1867m)(AF with TDD)

NodeB Transmit Power (dBm)

Relay Node Transmit Power (dBm)

SINR at the UE as a function of NB and RN transmit power with RN positioned at 0.75 cell radius.

## Fig.12B

Optimal NB transmit power as a function of RN transmit power for a
regenerative relay for FDD and TDD and for each deployment scenario.

Fig.13A

Relay Node Transmit Power (dBm)

—□— RN@933m (1 Cell)          ---□--- RN@933m (2 Cells)

—◇— RN@1400m (1 Cell)         ---◇--- RN@1400m (2 Cells)

Optimal NB transmit power as a function of RN transmit power for a non-regenerative relay for FDD for each deployment scenario.

*Fig.13B*

Optimal NB transmit power as a function of RN transmit power for a non-regenerative relay for FDD for each deployment scenario.

## Fig.13C

*Fig.14A*   Gain in average packet call throughput for deployment scenario 1.

*Fig.14B*   Gain in average packet call throughput for deployment scenario 2.

Optimal NB transmit power as a function of RN transmit power for a non-regenerative relay for TDD for each deployment scenario where it is assumed the NB to UE link has a 3 dB gain compared with the other links.

*Fig.15*

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/266339 A1 (LARSSON PETER [SE]) 30 December 2004 (2004-12-30) | 11-14 | INV. H04B7/005 |
| A | | 1-10, 15-23 | |
| | * page 2, paragraph 17 - page 3, paragraph 25 * * page 4, paragraph 52 - page 6, paragraph 82 * * figures 4-6 * ----- | | |
| A | GHASSEMIAN M ET AL: "Hybrid Handover in Multihop Radio Access Networks" VEHICULAR TECHNOLOGY CONFERENCE, 2005. VTC 2005-SPRING. 2005 IEEE 61ST STOCKHOLM, SWEDEN 30-01 MAY 2005, PISCATAWAY, NJ, USA,IEEE, 30 May 2005 (2005-05-30), pages 2207-2211, XP010855829 ISBN: 0-7803-8887-9 * abstract * * page 2208 * ----- | 1-23 | |
| | | | TECHNICAL FIELDS SEARCHED (IPC) H04B |

The present search report has been drawn up for all claims

| Place of search | Date of completion of the search | Examiner |
|---|---|---|
| The Hague | 10 May 2006 | Yang, Y |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

**EP 1 801 995 A1**

## ANNEX TO THE EUROPEAN SEARCH REPORT
## ON EUROPEAN PATENT APPLICATION NO.

EP 05 25 7911

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2006

| Patent document cited in search report | Publication date | Patent family member(s) | Publication date |
|---|---|---|---|
| US 2004266339 A1 | 30-12-2004 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 05253767 A
- EP 05253768 A
- EP 05253766 A
- EP 05253785 A
- EP 05253784 A
- EP 05253783 A